# EUROPEAN PATENT SPECIFICATION

(11) **EP 2 242 995 B1**
(45) Date of publication and mention of the grant of the patent: **29.07.2015**
(21) Application number: 09711334.4
(22) Date of filing: 02.02.2009
(51) Int. Cl.: G01C 21/36, G08G 1/0968, G08G 1/0969

(54) **NAVIGATION DEVICE, SYSTEM & METHOD WITH OVER THE AIR SEARCH MODULE**
NAVIGATIONSGERÄT, SYSTEM UND VERFAHREN MIT FUNKSUCHMODUL
DISPOSITIF, SYSTÈME ET PROCÉDÉ DE NAVIGATION AVEC UN MODULE DE RECHERCHE PAR LIAISON RADIO

(30) Priority: 15.02.2008 US 64091
(43) Date of publication of application: 27.10.2010
(73) Proprietor: TomTom International B.V., 1011 AC Amsterdam (NL)
(72) Inventor: GEELEN, Pieter, NL-1017 CT Amsterdam (NL)
(74) Representative: Dobson, Adrian
(86) International application number: PCT/EP2009/051140
(87) International publication number: WO 2009/100997

(56) References cited:
- EP-A1- 0 785 535
- EP-A2- 0 995 973
- WO-A1-01/13069
- US-A1- 2003 036 848

## Description

### Field of the Invention

This invention relates to navigation devices, systems and methods. Illustrative embodiments of the invention relate to portable navigation devices (so-called PNDs), in particular PNDs that include Global Positioning System (GPS) signal reception and processing functionality. Other embodiments relate, more generally, to any type of processing device that is configured to execute navigation software so as to provide route planning, and preferably also navigation, functionality.

### Background to the Invention

Portable navigation devices (PNDs) that include GPS (Global Positioning System) signal reception and processing functionality are well known and are widely employed as in-car or other vehicle navigation systems.

In general terms, a modern PNDs comprises a processor, memory (at least one of volatile and non-volatile, and commonly both), and map data stored within said memory. The processor and memory cooperate to provide an execution environment in which a software operating system may be established, and additionally it is commonplace for one or more additional software programs to be provided to enable the functionality of the PND to be controlled, and to provide various other functions.

Typically these devices further comprise one or more input interfaces that allow a user to interact with and control the device, and one or more output interfaces by means of which information may be relayed to the user. Illustrative examples of output interfaces include a visual display and a speaker for audible output. Illustrative examples of input interfaces include one or more physical buttons to control on/off operation or other features of the device (which buttons need not necessarily be on the device itself but could be on a steering wheel if the device is built into a vehicle), and a microphone for detecting user speech. In a particularly preferred arrangement the output interface display may be configured as a touch sensitive display (by means of a touch sensitive overlay or otherwise) to additionally provide an input interface by means of which a user can operate the device by touch.

Devices of this type will also often include one or more physical connector interfaces by means of which power and optionally data signals can be transmitted to and received from the device, and optionally one or more wireless transmitters/receivers to allow communication over cellular telecommunications and other signal and data networks, for example Wi-Fi, Wi-Max GSM and the like.

PND devices of this type also include a GPS antenna by means of which satellite-broadcast signals, including location data, can be received and subsequently processed to determine a current location of the device.

The PND device may also include electronic gyroscopes and accelerometers which produce signals that can be processed to determine the current angular and linear acceleration, and in turn, and in conjunction with location information derived from the GPS signal, velocity and relative displacement of the device and thus the vehicle in which it is mounted. Typically such features are most commonly provided in in-vehicle navigation systems, but may also be provided in PND devices if it is expedient to do so.

The utility of such PNDs is manifested primarily in their ability to determine a route between a first location (typically a start or current location) and a second location (typically a destination). These locations can be input by a user of the device, by any of a wide variety of different methods, for example by postcode, street name and house number, previously stored "well known" destinations (such as famous locations, municipal locations (such as sports grounds or swimming baths) or other points of interest), and favourite or recently visited destinations.

Typically, the PND is enabled by software for computing a "best" or "optimum" route between the start and destination address locations from the map data. A "best" or "optimum" route is determined on the basis of predetermined criteria and need not necessarily be the fastest or shortest route. The selection of the route along which to guide the driver can be very sophisticated, and the selected route may take into account existing, predicted and dynamically and/or wirelessly received traffic and road information, historical information about road speeds, and the driver's own preferences for the factors determining road choice (for example the driver may specify that the route should not include motorways or toll roads).

In addition, the device may continually monitor road and traffic conditions, and offer to or choose to change the route over which the remainder of the journey is to be made due to changed conditions. Real time traffic monitoring systems, based on various technologies (e.g. mobile phone data exchanges, fixed cameras, GPS fleet tracking) are being used to identify traffic delays and to feed the information into notification systems.

PNDs of this type may typically be mounted on the dashboard or windscreen of a vehicle, but may also be formed as part of an on-board computer of the vehicle radio or indeed as part of the control system of the vehicle itself. The navigation device may also be part of a hand-held system, such as a PDA (Portable Digital Assistant) a media player, a mobile phone or the like, and in these cases, the normal functionality of the hand-held system is extended by means of the installation of software on the device to perform both route calculation and navigation along a calculated route.

Route planning and navigation functionality may also be provided by a desktop or mobile computing resource running appropriate software.

In the context of a PND, once a route has been calculated, the user interacts with the navigation device to select the desired calculated route, optionally from a list of proposed routes. Optionally, the user may intervene in, or guide the route selection process, for example by specifying that certain routes, roads, locations or criteria are to be avoided or are mandatory for a particular journey. The route calculation aspect of the PND forms one primary function, and navigation along such a route is another primary function.

During navigation along a calculated route, it is usual for such PNDs to provide visual and/or audible instructions to guide the user along a chosen route to the end of that route, i.e. the desired destination. It is also usual for PNDs to display map information on-screen during the navigation, such information regularly being updated on-screen so that the map information displayed is representative of the current location of the device, and thus of the user or user's vehicle if the device is being used for in-vehicle navigation.

An icon displayed on-screen typically denotes the current device location, and is centred with the map information of current and surrounding roads in the vicinity of the current device location and other map features also being displayed. Additionally, navigation information may be displayed, optionally in a status bar above, below or to one side of the displayed map information, examples of navigation information include a distance to the next deviation from the current road required to be taken by the user, the nature of that deviation possibly being represented by a further icon suggestive of the particular type of deviation, for example a left or right turn. The navigation function also determines the content, duration and timing of audible instructions by means of which the user can be guided along the route. As can be appreciated a simple instruction such as "turn left in 100 m" requires significant processing and analysis. As previously mentioned, user interaction with the device may be by a touch screen, or additionally or alternately by steering column mounted remote control, by voice activation or by any other suitable method.

A further important function provided by the device is automatic route re-calculation in the event that: a user deviates from the previously calculated route during navigation (either by accident or intentionally); real-time traffic conditions dictate that an alternative route would be more expedient and the device is suitably enabled to recognize such conditions automatically, or if a user actively causes the device to perform route re-calculation for any reason.

It is also known to allow a route to be calculated with user defined criteria; for example, the user may prefer a scenic route to be calculated by the device, or may wish to avoid any roads on which traffic congestion is likely, expected or currently prevailing. The device software would then calculate various routes and weigh more favourably those that include along their route the highest number of points of interest (known as POIs) tagged as being for example of scenic beauty, or, using stored information indicative of prevailing traffic conditions on particular roads, order the calculated routes in terms of a level of likely congestion or delay on account thereof. Other POI-based and traffic information-based route calculation and navigation criteria are also possible.

Although the route calculation and navigation functions are fundamental to the overall utility of PNDs, it is possible to use the device purely for information display, or "free-driving", in which only map information relevant to the current device location is displayed, and in which no route has been calculated and no navigation is currently being performed by the device. Such a mode of operation is often applicable when the user already knows the route along which it is desired to travel and does not require navigation assistance.

Devices of the type described above, for example the 720T model manufactured and supplied by TomTom International B.V., provide a reliable means for enabling users to navigate from one position to another.

Such devices are of great utility when the user is not familiar with the route to the destination that they are navigating to. However, it may arise that the user wants to visit an unknown destination about which he has no location information and which unknown destination is not previously stored on the device. This problem may arise when the user is on route to a destination or arrives at a destination and realises that he requires something, for example a product or service, which is not provided by destinations previously stored on the navigation device. For example, on arriving at a destination to visit a relative the user may want to visit a florist in order to buy flowers. If there are no florist shop destinations in the user's locality that are previously stored on the device then the user will have to look for one themselves, which is likely to take time. This problem may also arise when the user develops an unexpected need while on the road and the need can only be serviced by a destination unknown to the user and which is not stored on the device. In addition, when the user of the device arrives at an unfamiliar destination and wants to find out what is happening in their locality, for example, local attractions and events, they may have to spend time and effort investigating their locality for information about destinations unknown to them and not stored on the device. Furthermore, when accessing information about destinations stored on the device, such as 'well known', or POI destinations, the user may require additional information about these destinations in order to be able to evaluate which ones to visit. The collection of such additional information may again take considerable time and effort on the part of the user of the device. Given the vast array of users of such devices and their individual interests and requirements it is difficult to develop a navigation device which has all the relevant destinations previously stored.

The uncertainty of having to look for such an unknown destination without the aid of the navigation device can inconvenience and stress the user of the device. Moreover, they can significantly add to the user's journey time as the user may have to spend a considerable amount of time actually looking for the unknown destination. These uncertainties affect PND and in-vehicle navigation device users.

WO01/13069 describes a method and apparatus for allowing a mobile processing device, such as a cellular telephone, notebook computer, automobile navigation system, PDA, PIM, etc., to access location-or time-dependent information maintained by a central server. At the server, a signal transmitted from the mobile device is received. The signal represents a user input applied at the mobile device and specifying an item in a database of the mobile device, such as a contact list. A signal corresponding to the selected item is transmitted by the mobile device to the server. The server computes location-or time-dependent information based on the signal and geocoded data in the server system. The location-or time-dependent information may comprise a geographic location, which may include a solution of a geographic proximity search, or information for assisting a driver in navigating an automobile. The geocoded data may be generated dynamically in response to the query from the mobile device.

EP0785535 describes an integrated guidance system which integrates and displays useful information from various information providers by a simple operation during travel. During travel the information is collected from various types of information supply servers connected to a network. A navigation server transmits the useful information to a mobile terminal device using radio communication. On a single screen the mobile terminal device displays traffic and town information which are obtained from the navigation server and map information from a secondary memory section. Even if the information provider differs, useful information for a user is displayed when travelling in an integrated form by a simple operation.

It is an aim of the present invention to address this problem, in particular to attempt to make navigating to an unknown destination as easy as navigating to a known location.

### Summary of the Invention

In pursuit of this aim, the present invention is set out in independent claims 1, 15, and 17.

Advantages of these embodiments are set out hereafter, and further details and features of each of these embodiments are defined in the accompanying dependent claims and elsewhere in the following detailed description.

### Brief Description of the Drawings

Various aspects of the teachings of the present invention, and arrangements embodying those teachings, will hereafter be described by way of illustrative example with reference to the accompanying drawings, in which:
Fig. 1 is a schematic illustration of a Global Positioning System (GPS);
Fig. 2 is a schematic illustration of electronic components arranged to provide a navigation device;
Fig. 3 is a schematic illustration of the manner in which a navigation device may receive information over a wireless communication channel from a dedicated server;
Figs. 4A and 4B are illustrative perspective views of a navigation device;
Figs. 5a to 5i are illustrative screenshots from a TomTom 720T PND for a destination input process;
Fig. 6 is an illustrative screenshot depicting a 3D navigation view for an illustrative calculated route, including a button to the 'where to search' screen of Figure 8;
Fig. 7 is an illustrative screenshot depicting a map browser view;
Fig. 8 is an illustrative screenshot depicting a 'where to search' screen view;
Fig. 9 is an illustrative screenshot depicting a 'location selector' screen similar to that of Figure 5c, but additionally including a button to the 'where to search' screen of Figure 8;
Fig. 10 is an illustrative screenshot depicting a 'select a city' screen view for an illustrative search process;
Figs. 11 and 12 are illustrative screenshots depicting a 'what to search' screen view for an illustrative search process;
Fig. 13 is an illustrative screenshot depicting a 'search results' screen view for an illustrative search process;
Fig. 14 is an illustrative screenshot depicting a 'location information' screen view for an illustrative search process;
Fig. 15 is an illustrative screenshot depicting a 'dial a location' screen view for an illustrative search process;
Fig. 16 is an illustrative screenshot depicting a 'location detail' screen view for an illustrative search process;
Fig. 17 is an illustrative screenshot depicting a 'navigate to the search result' screen view for an illustrative search process;
Fig. 18 is an illustrative screenshot depicting a 'quick menu' screen view including a button to the 'where to search' screen of Figure 8;
Fig.19 is an illustrative screenshot depicting a 'search results on map' screen view for an illustrative search process;
Fig 20 is a schematic representation of the software employed by the navigation device;
Figure 21 is a schematic illustration of the navigation device of Figure 2 illustrating the network connections between the navigation device and a map search server;
Fig. 22 is a schematic illustration of the manner in which a navigation device may receive information over a wireless communication channel from a dedicated server and illustrates the network connections between the navigation device, the dedicated server and a map search server;
Figures 23 and 24 are illustrative flow diagrams depicting the steps of one method by which the teachings of the present invention may be implemented.

### Detailed Description of Preferred Embodiments

Preferred embodiments of the present invention will now be described with particular reference to a PND. It should be remembered, however, that the teachings of the present invention are not limited to PNDs but are instead universally applicable to any type of processing device that is configured to execute navigation software so as to provide route planning and navigation functionality. It follows therefore that in the context of the present application, a navigation device is intended to include (without limitation) any type of route planning and navigation device, irrespective of whether that device is embodied as a PND, a navigation device built into a vehicle, mobile telephone or portable digital assistant (PDA)) executing route planning and navigation software.

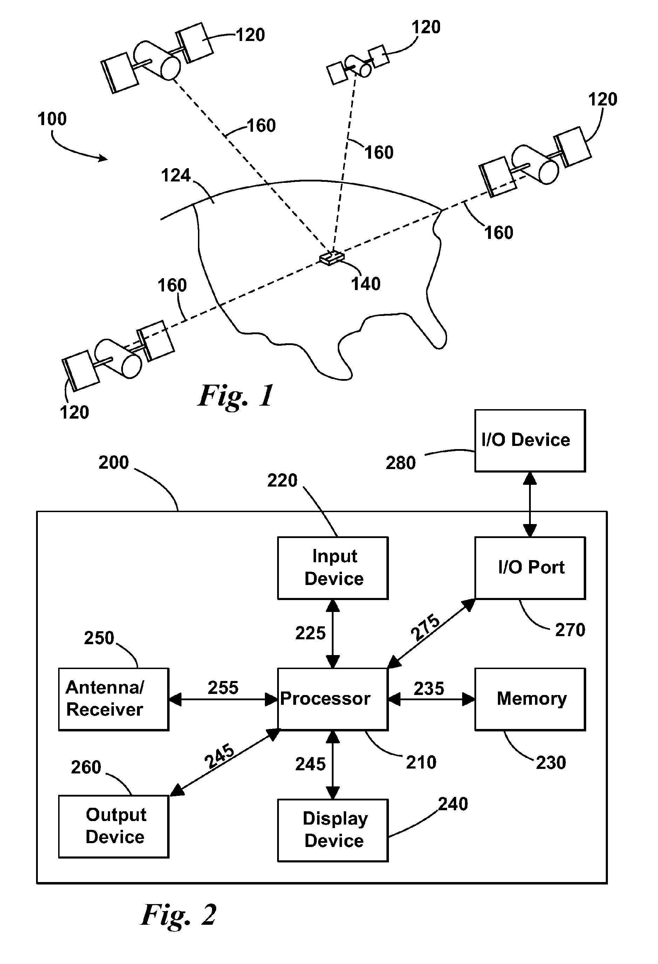

With the above provisos in mind, Fig. 1 illustrates an example view of Global Positioning System (GPS), usable by navigation devices. Such systems are known and are used for a variety of purposes. In general, GPS is a satellite-radio based navigation system capable of determining continuous position, velocity, time, and in some instances direction information for an unlimited number of users. Formerly known as NAVSTAR, the GPS incorporates a plurality of satellites which orbit the earth in extremely precise orbits. Based on these precise orbits, GPS satellites can relay their location to any number of receiving units.

The GPS system is implemented when a device, specially equipped to receive GPS data, begins scanning radio frequencies for GPS satellite signals. Upon receiving a radio signal from a GPS satellite, the device determines the precise location of that satellite via one of a plurality of different conventional methods. The device will continue scanning, in most instances, for signals until it has acquired at least three different satellite signals (noting that position is not normally, but can be determined, with only two signals using other triangulation techniques). Implementing geometric triangulation, the receiver utilizes the three known positions to determine its own two-dimensional position relative to the satellites. This can be done in a known manner. Additionally, acquiring a fourth satellite signal will allow the receiving device to calculate its three dimensional position by the same geometrical calculation in a known manner. The position and velocity data can be updated in real time on a continuous basis by an unlimited number of users.

As shown in Figure 1, the GPS system is denoted generally by reference numeral 100. A plurality of satellites 120 are in orbit about the earth 124. The orbit of each satellite 120 is not necessarily synchronous with the orbits of other satellites 120 and, in fact, is likely asynchronous. A GPS receiver 140 is shown receiving spread spectrum GPS satellite signals 160 from the various satellites 120.

The spread spectrum signals 160, continuously transmitted from each satellite 120, utilize a highly accurate frequency standard accomplished with an extremely accurate atomic clock. Each satellite 120, as part of its data signal transmission 160, transmits a data stream indicative of that particular satellite 120. It is appreciated by those skilled in the relevant art that the GPS receiver device 140 generally acquires spread spectrum GPS satellite signals 160 from at least three satellites 120 for the GPS receiver device 140 to calculate its two-dimensional position by triangulation. Acquisition of an additional signal, resulting in signals 160 from a total of four satellites 120, permits the GPS receiver device 140 to calculate its three-dimensional position in a known manner.

Figure 2 is an illustrative representation of electronic components of a navigation device 200 according to a preferred embodiment of the present invention, in block component format. It should be noted that the block diagram of the navigation device 200 is not inclusive of all components of the navigation device, but is only representative of many example components.

The navigation device 200 is located within a housing (not shown). The housing includes a processor 210 connected to an input device 220 and a display screen 240. The input device 220 can include a keyboard device, voice input device, touch panel and/or any other known input device utilised to input information; and the display screen 240 can include any type of display screen such as an LCD display, for example. In a particularly preferred arrangement the input device 220 and display screen 240 are integrated into an integrated input and display device, including a touchpad or touchscreen input so that a user need only touch a portion of the display screen 240 to select one of a plurality of display choices or to activate one of a plurality of virtual buttons.

The navigation device may include an output device 260, for example an audible output device (e.g. a loudspeaker). As output device 260 can produce audible information for a user of the navigation device 200, it is should equally be understood that input device 240 can include a microphone and software for receiving input voice commands as well.

In the navigation device 200, processor 210 is operatively connected to and set to receive input information from input device 220 via a connection 225, and operatively connected to at least one of display screen 240 and output device 260, via output connections 245, to output information thereto. Further, the processor 210 is operably coupled to a memory resource 230 via connection 235 and is further adapted to receive/send information from/to input/output (I/O) ports 270 via connection 275, wherein the I/O port 270 is connectible to an I/O device 280 external to the navigation device 200. The memory resource 230 comprises, for example, a volatile memory, such as a Random Access Memory (RAM) and a non-volatile memory, for example a digital memory, such as a flash memory. The external I/O device 280 may include, but is not limited to an external listening device such as an earpiece for example. The connection to I/O device 280 can further be a wired or wireless connection to any other external device such as a car stereo unit for hands-free operation and/or for voice activated operation for example, for connection to an ear piece or head phones, and/or for connection to a mobile phone for example, wherein the mobile phone connection may be used to establish a data connection between the navigation device 200 and the internet or any other network for example, and/or to establish a connection to a server via the internet or some other network for example.

Fig. 2 further illustrates an operative connection between the processor 210 and an antenna/receiver 250 via connection 255, wherein the antenna/receiver 250 can be a GPS antenna/receiver for example. It will be understood that the antenna and receiver designated by reference numeral 250 are combined schematically for illustration, but that the antenna and receiver may be separately located components, and that the antenna may be a GPS patch antenna or helical antenna for example.

Further, it will be understood by one of ordinary skill in the art that the electronic components shown in Fig. 2 are powered by power sources (not shown) in a conventional manner. As will be understood by one of ordinary skill in the art, different configurations of the components shown in Fig. 2 are considered to be within the scope of the present application. For example, the components shown in Fig. 2 may be in communication with one another via wired and/or wireless connections and the like. Thus, the scope of the navigation device 200 of the present application includes a portable or handheld navigation device 200.

In addition, the portable or handheld navigation device 200 of Fig. 2 can be connected or "docked" in a known manner to a vehicle such as a bicycle, a motorbike, a car or a boat for example. Such a navigation device 200 is then removable from the docked location for portable or handheld navigation use.

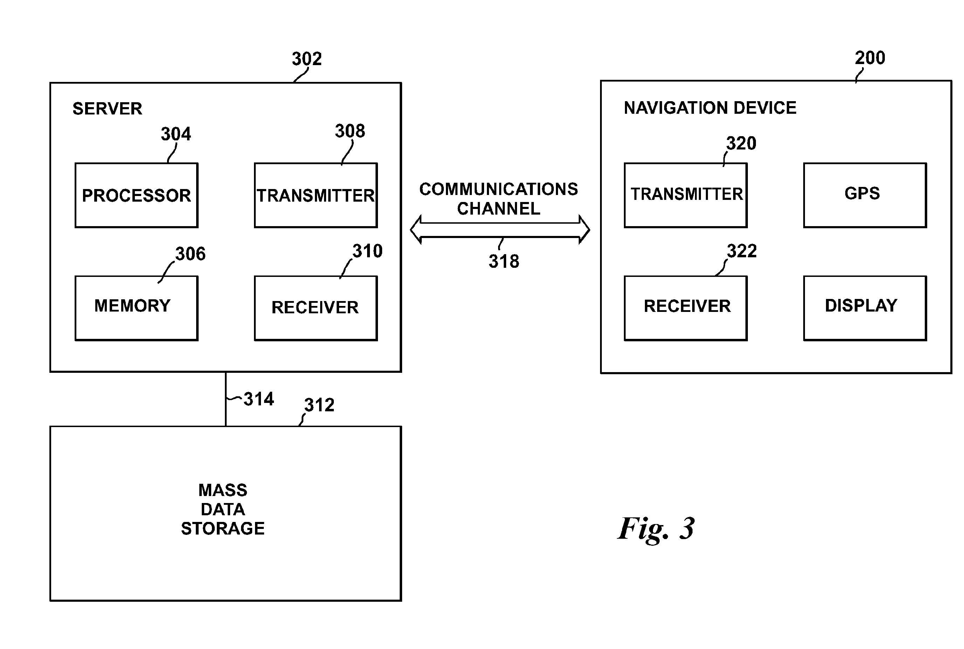

Referring now to Fig. 3, the navigation device 200 may establish a "mobile" or telecommunications network connection with a dedicated server 302 via a mobile device (not shown) (such as a mobile phone, PDA, and/or any device with mobile phone technology) establishing a digital connection (such as a digital connection via known Bluetooth technology for example). Thereafter, through its network service provider, the mobile device can establish a network connection (through the internet for example) with the server 302. As such, a "mobile" network connection is established between the navigation device 200 (which can be, and often times is mobile as it travels alone and/or in a vehicle) and the server 302 to provide a "real-time" or at least very "up to date" gateway for information.

The establishing of the network connection between the mobile device (via a service provider) and another device such as the dedicated server 302, using an internet (such as the World Wide Web) for example, can be done in a known manner. This can include use of TCP/IP layered protocol for example. The mobile device can utilize any number of communication standards such as CDMA, GSM, WAN, etc.

As such, an internet connection may be utilised which is achieved via data connection, via a mobile phone or mobile phone technology within the navigation device 200 for example. For this connection, an internet connection between the dedicated server 302 and the navigation device 200 is established. This can be done, for example, through a mobile phone or other mobile device and a GPRS (General Packet Radio Service)-connection (GPRS connection is a high-speed data connection for mobile devices provided by telecom operators; GPRS is a method to connect to the internet).

The navigation device 200 can further complete a data connection with the mobile device, and eventually with the internet and dedicated server 302, via existing Bluetooth technology for example, in a known manner, wherein the data protocol can utilize any number of standards, such as the GSRM, the Data Protocol Standard for the GSM standard, for example.

The navigation device 200 may include its own mobile phone technology within the navigation device 200 itself (including an antenna for example, or optionally using the internal antenna of the navigation device 200). The mobile phone technology within the navigation device 200 can include internal components as specified above, and/or can include an insertable card (e.g. Subscriber Identity Module or SIM card), complete with necessary mobile phone technology and/or an antenna for example. As such, mobile phone technology within the navigation device 200 can similarly establish a network connection between the navigation device 200 and the dedicated server 302, via the internet for example, in a manner similar to that of any mobile device.

For GRPS phone settings, a Bluetooth enabled navigation device may be used to correctly work with the ever changing spectrum of mobile phone models, manufacturers, etc., model/manufacturer specific settings may be stored on the navigation device 200 for example. The data stored for this information can be updated.

In Fig. 3 the navigation device 200 is depicted as being in communication with the dedicated server 302 via a generic communications channel 318 that can be implemented by any of a number of different arrangements. The server 302 and a navigation device 200 can communicate when a connection via communications channel 318 is established between the server 302 and the navigation device 200 (noting that such a connection can be a data connection via mobile device, a direct connection via personal computer via the internet, etc.).

The dedicated server 302 includes, in addition to other components which may not be illustrated, a processor 304 operatively connected to a memory 306 and further operatively connected, via a wired or wireless connection 314, to a mass data storage device 312. The processor 304 is further operatively connected to transmitter 308 and receiver 310, to transmit and send information to and from navigation device 200 via communications channel 318. The signals sent and received may include data, communication, and/or other propagated signals. The transmitter 308 and receiver 310 may be selected or designed according to the communications requirement and communication technology used in the communication design for the navigation system 200. Further, it should be noted that the functions of transmitter 308 and receiver 310 may be combined into a signal transceiver.

Dedicated server 302 is further connected to (or includes) a mass storage device 312, noting that the mass storage device 312 may be coupled to the server 302 via communication link 314. The mass storage device 312 contains a store of navigation data and map information, and can again be a separate device from the dedicated server 302 or can be incorporated into the server 302.

The navigation device 200 is adapted to communicate with the dedicated server 302 through communications channel 318, and includes processor, memory, etc. as previously described with regard to Fig. 2, as well as transmitter 320 and receiver 322 to send and receive signals and/or data through the communications channel 318, noting that these devices can further be used to communicate with devices other than server 302. Further, the transmitter 320 and receiver 322 are selected or designed according to communication requirements and communication technology used in the communication design for the navigation device 200 and the functions of the transmitter 320 and receiver 322 may be combined into a single transceiver.

Software stored in the dedicated server memory 306 provides instructions for the processor 304 and allows the server 302 to provide services to the navigation device 200. One service provided by the server 302 involves processing requests from the navigation device 200 and transmitting navigation data from the mass data storage 312 to the navigation device 200. Another service provided by the server 302 includes processing the navigation data using various algorithms for a desired application and sending the results of these calculations to the navigation device 200.

The communication channel 318 generically represents the propagating medium or path that connects the navigation device 200 and the server 302. Both the dedicated server 302 and navigation device 200 include a transmitter for transmitting data through the communication channel and a receiver for receiving data that has been transmitted through the communication channel.

The communication channel 318 is not limited to a particular communication technology. Additionally, the communication channel 318 is not limited to a single communication technology; that is, the channel 318 may include several communication links that use a variety of technology. For example, the communication channel 318 can be adapted to provide a path for electrical, optical, and/or electromagnetic communications, etc. As such, the communication channel 318 includes, but is not limited to, one or a combination of the following: electric circuits, electrical conductors such as wires and coaxial cables, fibre optic cables, converters, radio-frequency (RF) waves, the atmosphere, empty space, etc. Furthermore, the communication channel 318 can include intermediate devices such as routers, repeaters, buffers, transmitters, and receivers, for example.

In one illustrative arrangement, the communication channel 318 includes telephone and computer networks. Furthermore, the communication channel 318 may be capable of accommodating wireless communication such as radio frequency, microwave frequency, infrared communication, etc. Additionally, the communication channel 318 can accommodate satellite communication.

The communication signals transmitted through the communication channel 318 include, but are not limited to, signals as may be required or desired for given communication technology. For example, the signals may be adapted to be used in cellular communication technology such as Time Division Multiple Access (TDMA), Frequency Division Multiple Access (FDMA), Code Division Multiple Access (CDMA), Global System for Mobile Communications (GSM), etc. Both digital and analogue signals can be transmitted through the communication channel 318. These signals may be modulated, encrypted and/or compressed signals as may be desirable for the communication technology.

The dedicated server 302 includes a remote server accessible by the navigation device 200 via a wireless channel. The server 302 may include a network server located on a local area network (LAN), wide area network (WAN), virtual private network (VPN), etc.

The dedicated server 302 may include a personal computer such as a desktop or laptop computer, and the communication channel 318 may be a cable connected between the personal computer and the navigation device 200. Alternatively, a personal computer may be connected between the navigation device 200 and the server 302 to establish an internet connection between the server 302 and the navigation device 200. Alternatively, a mobile telephone or other handheld device may establish a wireless connection to the internet, for connecting the navigation device 200 to the server 302 via the internet.

The navigation device 200 may be provided with information from the dedicated server 302 via information downloads which may be periodically updated automatically or upon a user connecting navigation device 200 to the server 302 and/or may be more dynamic upon a more constant or frequent connection being made between the server 302 and navigation device 200 via a wireless mobile connection device and TCP/IP connection for example. For many dynamic calculations, the processor 304 in the server 302 may be used to handle the bulk of the processing needs, however, processor 210 of navigation device 200 can also handle much processing and calculation, oftentimes independent of a connection to a dedicated server 302.

As indicated above in Fig. 2, a navigation device 200 includes a processor 210, an input device 220, and a display screen 240. The input device 220 and display screen 240 are integrated into an integrated input and display device to enable both input of information (via direct input, menu selection, etc.) and display of information through a touch panel screen, for example. Such a screen may be a touch input LCD screen, for example, as is well known to those of ordinary skill in the art. Further, the navigation device 200 can also include any additional input device 220 and/or any additional output device 241, such as audio input/output devices for example.

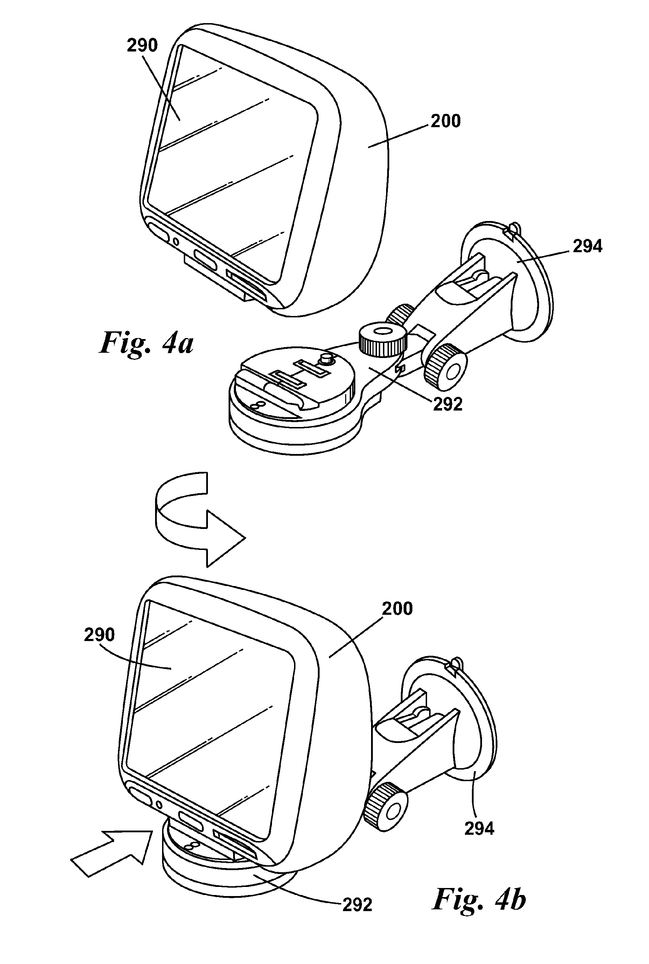

Figs 4A and 4B are perspective views of a navigation device 200. As shown in Fig. 4A, the navigation device 200 may be a unit that includes an integrated input and display device 290 (a touch panel screen for example) and the other components of fig. 2 (including but not limited to internal GPS receiver 250, microprocessor 210, a power supply, memory systems 230, etc.).

The navigation device 200 may sit on an arm 292, which itself may be secured to a vehicle dashboard/window/etc. using a suction cup 294. This arm 292 is one example of a docking station to which the navigation device 200 can be docked.

As shown in Fig. 4B, the navigation device 200 can be docked or otherwise connected to an arm 292 of the docking station by snap connecting the navigation device 292 to the arm 292 for example. The navigation device 200 may then be rotatable on the arm 292, as shown by the arrow of Fig. 4B. To release the connection between the navigation device 200 and the docking station, a button on the navigation device 200 may be pressed, for example. Other equally suitable arrangements for coupling and decoupling the navigation device to a docking station are well known to persons of ordinary skill in the art.

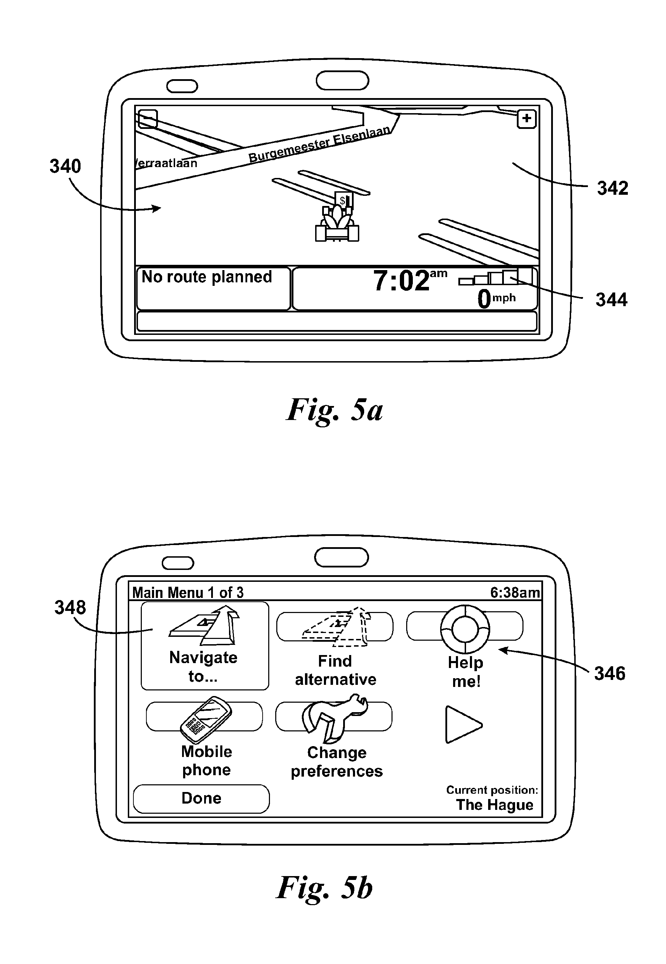

Referring now to Figs. 5a to 5i there is depicted a series of screenshots from a TomTom 720T navigation device. This model of TomTom PND has a touchscreen interface for displaying information to a user and for accepting input to the device from the user. The screenshots show an illustrative destination location input process for a user whose home location has been set to the offices in The Hague of the European Patent Office, and who wishes to navigate to a street address in Amsterdam, The Netherlands for which they know the street name and building number.

When this user switches on their TomTom PND, the device acquires a GPS fix and calculates (in a known manner) the current location of the PND. The user is then presented, as shown in Fig. 5a, with a display 340 showing in pseudo three-dimensions the local environment 342 in which the PND is determined to be located, and in a region 344 of the display 340 below the local environment a series of control and status messages.

By touching the display of the local environment 342, the PND switches to display (as shown in Fig. 5b) a series of virtual buttons 346 by means of which a user can, inter alia, input a destination that they wish to navigate to.

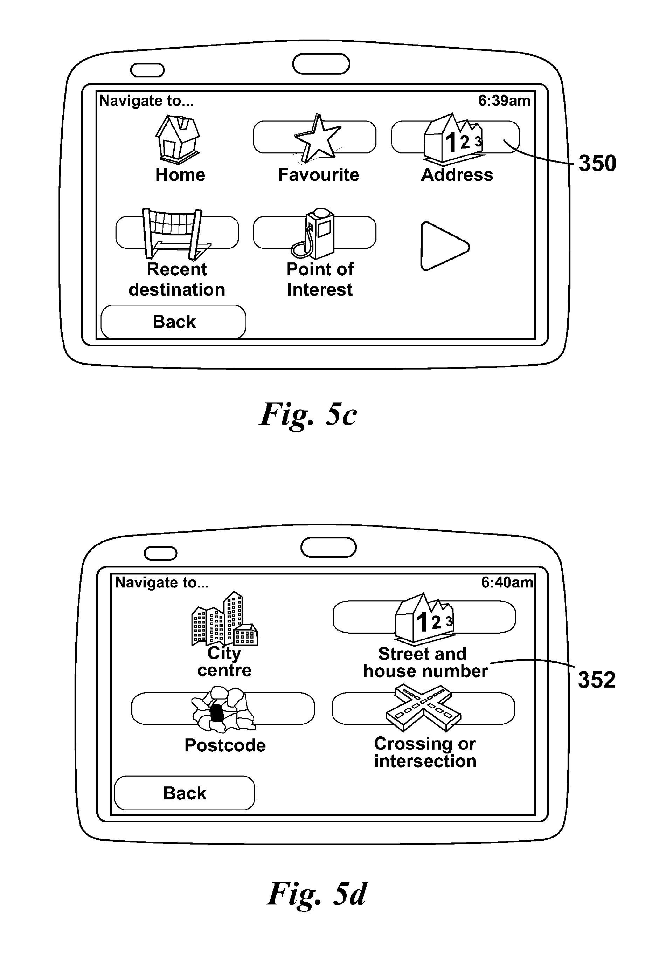

By touching the "navigate to" virtual button 348, the PND switches to display (as shown in Fig. 5c) a plurality of virtual buttons that are each associated with a different category of selectable destinations. In this instance, the display shows a "home" button that if pressed would set the destination to the stored home location. However, in this instance as the user is already at their home location (namely the EPO's offices in the Hague) selecting this option would not cause a route to be generated. The "favourite" button, if pressed, reveals a list of destinations that the user has previously stored in the PND and if one of these destinations is then selected the destination for the route to be calculated is set to the selected previously stored destination. The "recent destination" button, if pressed, reveals a list of selectable destinations held in the memory of the PND and to which the user has recently navigated. Selection of one of the destinations populating this list would set the destination location for this route to the selected (previously visited) location. The "point of interest" button, if pressed, reveals a number of options by means of which a user can opt to navigate to any of a plurality of locations, such as cash machines, petrol stations or tourist attractions for example, that have been pre-stored in the device as locations that a user of the device might want to navigate to. The "arrow" shaped virtual button opens a new menu of additional options, and the "address" button 350 commences a process by which the user can input the street address of the destination that they wish to navigate to.

Since the user, in this example, knows the street address of the destination that they wish to navigate to, it is assumed that this "address" button is operated (by touching the button displayed on the touchscreen), whereupon (as shown in Fig. 5d) the user is presented with a series of address input options - in particular for address input by "city centre", by "postcode", by "crossing or intersection" (for example a junction of two roads) and by "street and house number".

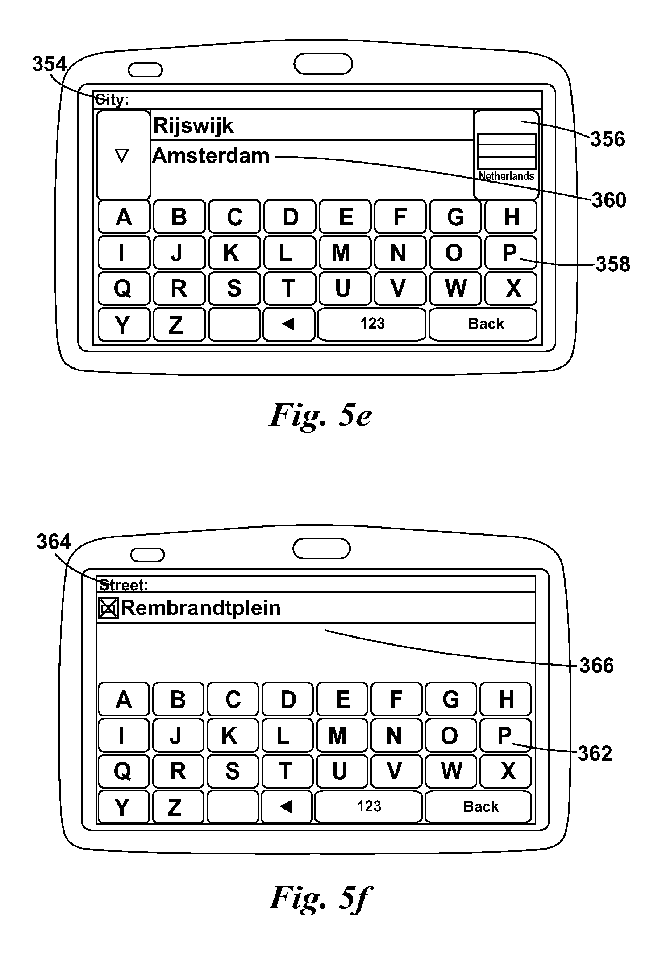

In this example the user knows the street address and house number of the destination and hence selects the "street and house number" virtual button 352 whereupon the user is then presented, as shown in Fig. 5e, a prompt 354 to enter the name of the city that they wish to navigate to, a flag button 356 by means of which the user can select the country in which the desired city is located, and a virtual keyboard 358 that may be operated by the user, if necessary, to input the name of the destination city. In this instance the user has previously navigated to locations in Rijswijk and Amsterdam, and the PND therefore additionally provides the user with a list 360 of selectable cites.

The user in this instance wishes to navigate to Amsterdam, and on selection of Amsterdam from the list 360 the PND displays, as shown in Fig. 5f, a virtual keyboard 362 by means of which a user can input street names, a prompt 364 for entry of a streetname 364 and, in this instance, as the user has previously navigated to a street in Amsterdam, a list 366 of selectable streets in Amsterdam.

In this example the user wishes to return to the street, Rembrandtplein, that they have previously visited and so selects Rembrandtplein from the displayed list 366.

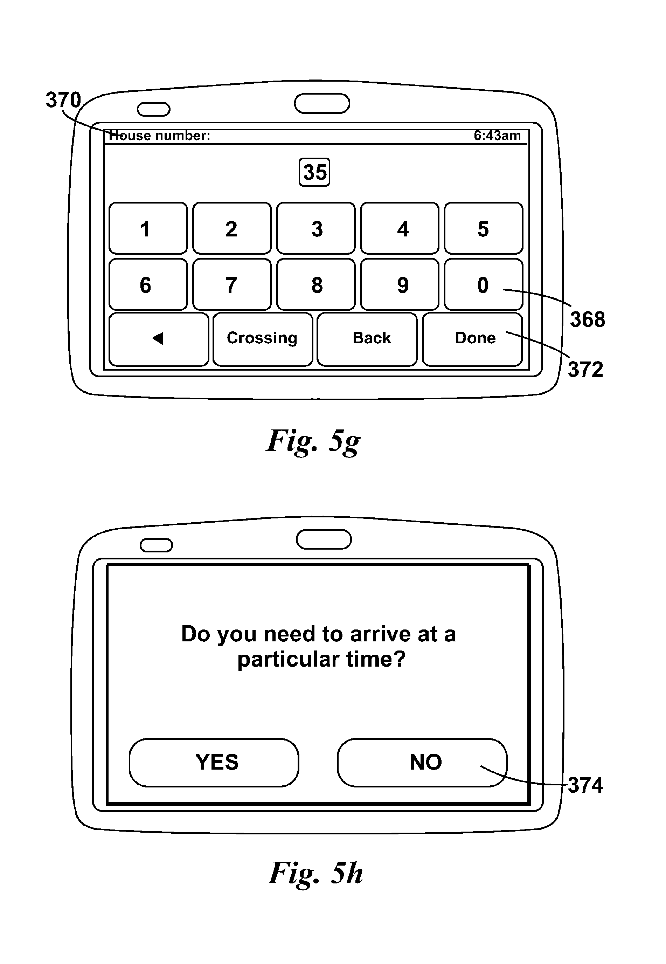

Once a street has been selected, the PND then displays a smaller virtual keypad 368 and prompts the user, by means of prompt 370, to enter the number of the house in the selected street and city that they wish to navigate to. If the user has previously navigated to a house number in this street, then that number (as shown in Fig. 5g) is initially shown. If, as in this instance, the user wishes to navigate to No. 35, Rembrandtplein once again, then the user need only touch a "done" virtual button 372 displayed at the bottom right hand corner of the display. If the user should wish to navigate to a different house number in Rembrandtplein, then all they need do is operate the keypad 368 to input the appropriate house number.

Once the house number has been input, the user is asked in Fig. 5h, whether they wish to arrive at a particular time. If the user should push the "yes" button, then functionality is invoked that estimates the time required to travel to the destination and advises the user when they should leave (or if they are running late, should have left) their current location in order to arrive at their destination on time. In this instance the user is not concerned about arriving at a particular time and hence selects the "no" virtual button.

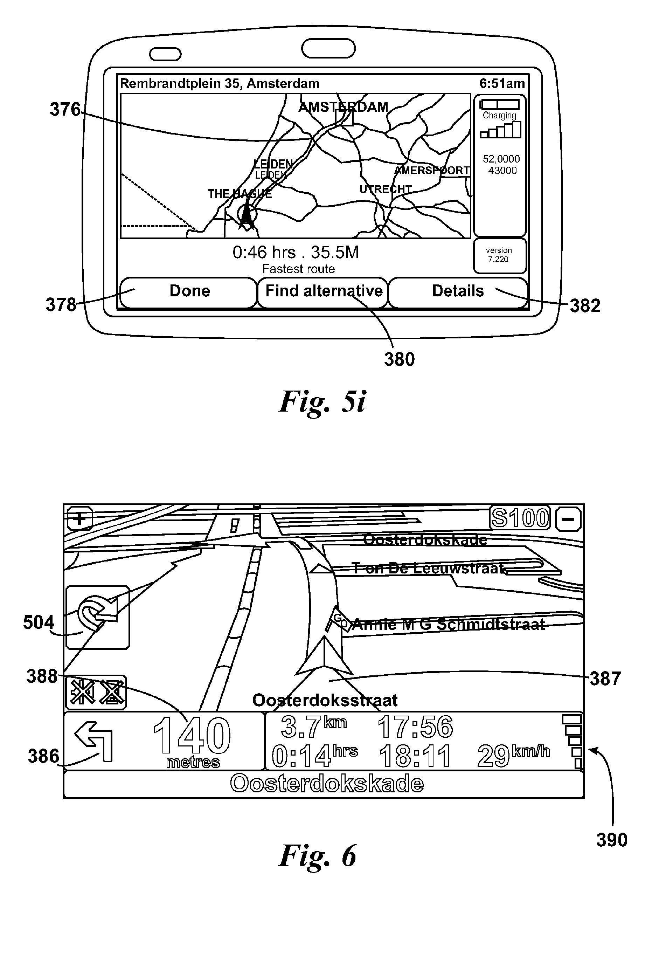

Selecting the "no" button 374 causes the PND to calculate a route between the current location and the selected destination and to display that route 376, as shown in Fig. 5i, on a relatively low magnification map that shows the entire route. The user provided with a "done" virtual button 378 which they can press to indicate that they are happy with the calculated route, a "find alternative" button 380 that the user can press to cause the PND to calculate another route to the selected destination, and a "details" button 382 that a user can press to reveal selectable options for the display of more detailed information concerning the currently displayed route 376.

In this instance it is assumed that the user is happy with the displayed route, and once the "done" button 378 has been pressed the user is presented with a pseudo three-dimensional view of the current, start, location for the PND.

The user then commences their journey and the PND guides the user, in a known manner, by updating the map in accordance with determined changes in PND location, and by providing the user with visual and, optionally, audible navigation instructions until they arrive at their destination.

The display depicted in Fig. 6 is similar to that shown in Fig. 5a except that the displayed local environment 342 is at a different location. The Figure 6 display includes a waypoint indicator 386 indicating the next manoeuvre (in this instance, a left hand turn). The lower part of the display has also changed and now displays the name of the street in which the PND is currently located, in this example 'Osterdokstraat', an icon 388 indicating the distance to and type of the next manoeuvre (from the current location of the PND), and a dynamic display 390 of the distance and time to the selected destination.

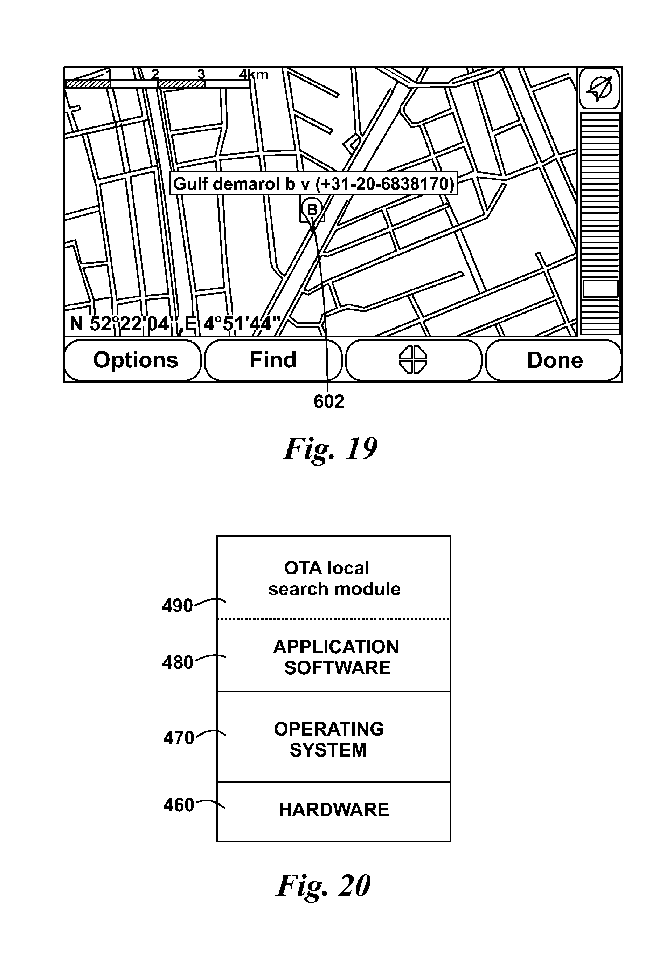

The navigation device 200 and method of the present invention is described in relation to Figures 6 to 24 and includes an over the air (OTA) local search module 490, depicted in Figure 20, providing the user with an on-device OTA local search service that is not limited to locations previously stored on the navigation device or on the dedicated server 302. The OTA local search service allows the user to find any unknown destination in an up to date online database, while they are on the move and which seamlessly enables the navigation device to navigate to that destination.

The OTA local search module 490 and local search described herein operates in partnership with Google™ maps, which is a website accessible over the internet. It should be understood, that the present invention could operate equally well with any other digital service equivalent to Google™ maps and which is available over a network connection, for example over the internet. The OTA local search service can be offered to the user of the navigation device 200 via the user interface (UI) of the device, for example via input device 220, display screen 240 and/or an integrated input and display device, including a touch sensitive display, as described above. Figures 6 to 19 show illustrative screenshots from such a touch sensitive display UI of a navigation device 200 incorporating the OTA local search module.

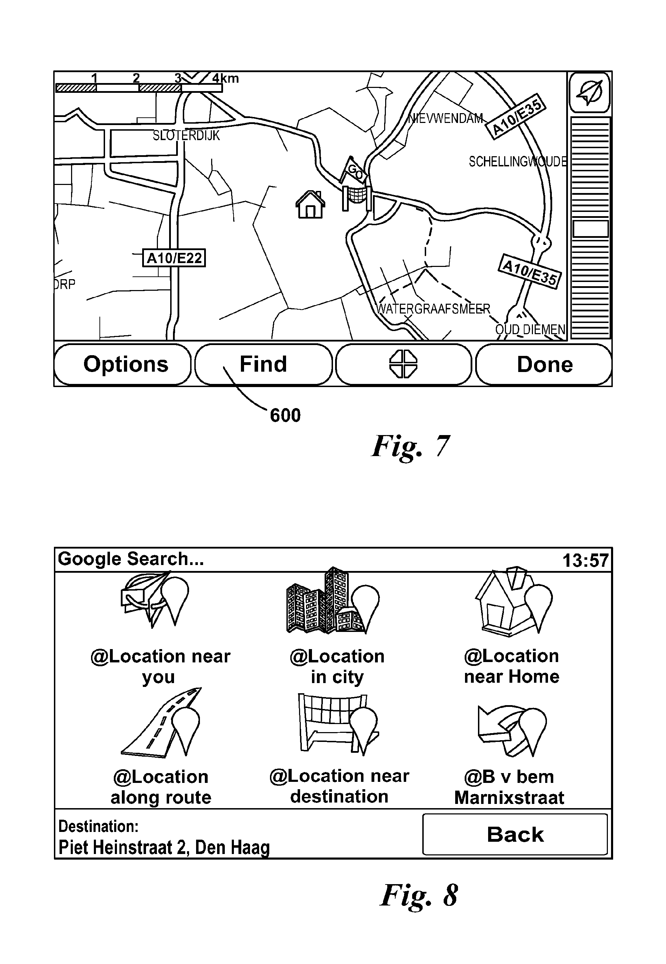

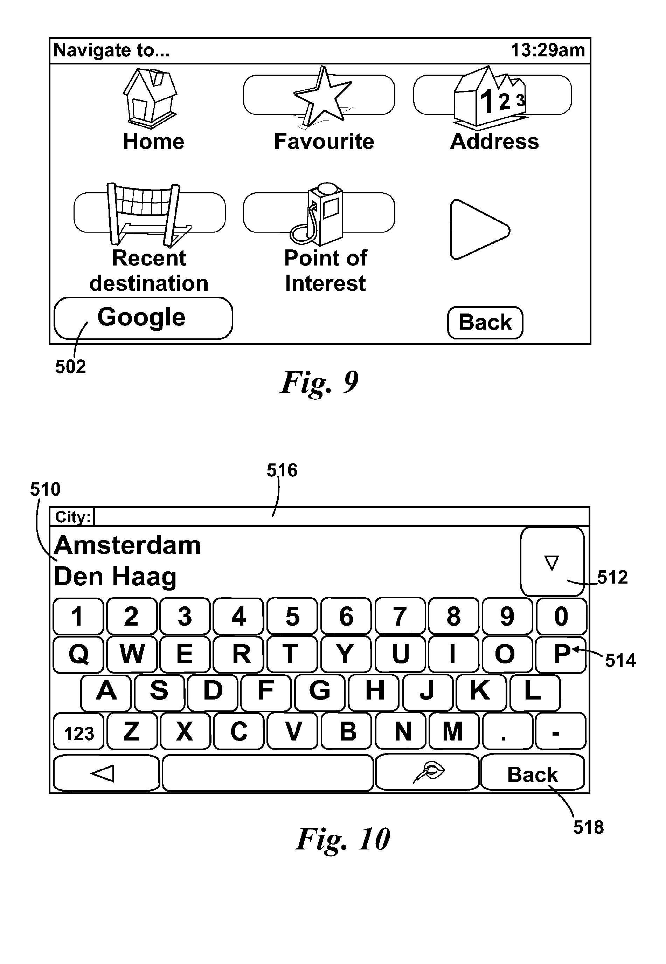

The OTA local search service can be offered in various screens of the user interface of the navigation device 200 available for view by the user on a touch sensitive display, input. Figure 9 is an illustrative screenshot, the same as that of Figure 5c, of the 'location selector' screen of the user interface of the navigation device 200, except that it includes a 'Google™ branded' button (502), which when actuated by the user, takes the user to a 'where to search' screen, as is shown in Figure 8.

The screen shot of Figure 6 additionally includes a button 504, which when actuated by the user, takes the user to the 'location selector' screen of Figure 9. The 'location selector' screen of Figure 9 can also be accessed from other parts of the user interface, for example, the 'map browser' screen of Figure 7, as is described below in more detail.

Thus, a Google™ branded button 502, is included on the 'location selector' screen of the user interface of the device 200. When the user clicks the button 502, the 'where to search' screen of Figure 8 is displayed on the screen 290 of the device 200.

From the 'where to search' screen of Figure 8 the user can elect to search for a destination unknown to them, either: at a location near to the user by clicking the '@ Location near you' button; at a location in a city by clicking the '@ Location in city' button; at a location near to the user's home location, which home location is stored in the memory 230 of the navigation device 200, by clicking the '@ Location near home' button; at a location along the route which the navigation device 200 is currently navigating the user along by clicking the '@ Location along route' button; or at a location near the destination to which the navigation device 200 is currently navigating the user to by clicking the '@ Location near destination' button. These five '@ Location' buttons are all displayed on the 'where to search' screen, as is shown in Figure 8 along with a sixth button showing the most recently selected search result from a search carried out by the user using the OTA local search service. In the example shown in Figure 8, the most recently selected search result is '@B v bem Marnixstraat' and by clicking the '@B v bem Marnixstraat' button the user can elect to search for a destination unknown to them at a location near to the location of '@B v bem Marnixstraat'.

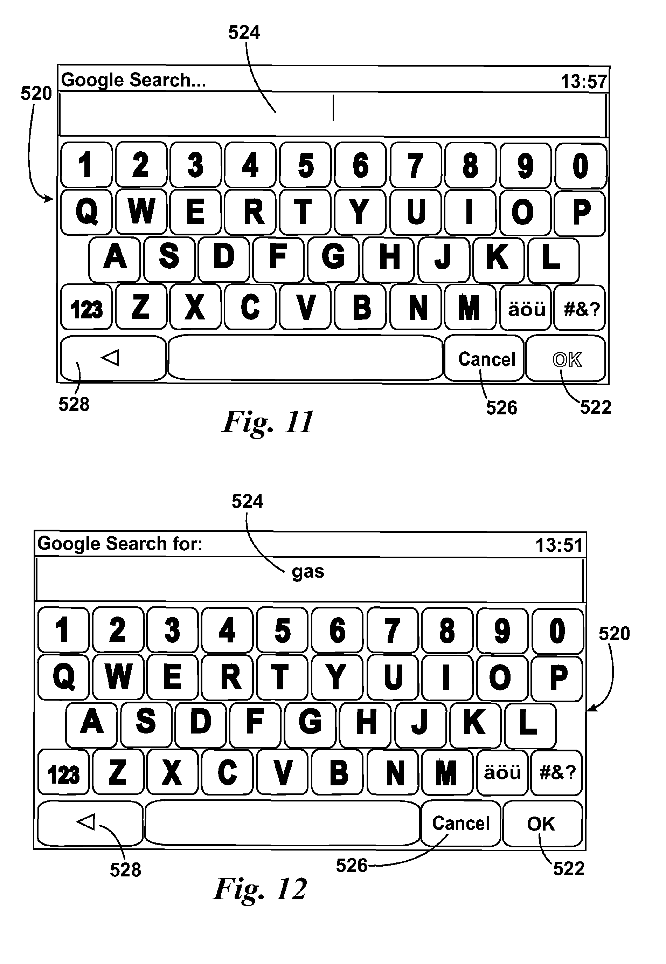

Where the user clicks the button '@ Location in city' on the 'location selector' screen of Figure 8, the 'Select a city' screen shown in Figure 10 will be displayed on the display device 240 of the navigation device 200. Recently visited cities, in the example of Figure 10, Amsterdam and Den Haag, are displayed in a scroll down area 510 of the 'Select a city' screen. Additional, recently visited cities can be scrolled through and displayed in the scroll down area 510 of the 'Select a city' screen by the user clicking the scroll button 512 shown in Figure 10. To select a city in the scroll down area 510, the user clicks the scroll button 512 until the desired city is displayed in the scroll down area 510 and then, where a touch sensitive display is used, touches the area of the scroll down area 510 displaying the name of the desired city. Where the desired city is not available in the scroll down area 510, the user types in the name of the desired city by operating the keys of the virtual keyboard area 514 of the 'Select a city' screen of Figure 10. The name of the typed city, is displayed in the region 516 of the 'Select a city' screen, as it is typed in by the user. To select the typed in city, the user then actuates, for example by touching, the region 516 of the 'Select a city' screen. Once a user has selected a desired city, using the 'Select a city' screen of Figure 10, the display device 240 of the navigation device 200 displays the 'What' screen of Figure 11. To go back to the 'where to search' screen of Figure 8, without selecting a desired city, the user touches the 'Back' button 518 of the 'Select a city' screen of Figure 10.

With reference to Figure 8, activating any of the five buttons on the 'location selector' screen, other then the '@ Location in city' button results in the 'What' screen of Figure 11 being displayed on the display device 240 of the navigation device 200. The search described below in relation to the 'What' screen of Figure 11, will then be carried out with respect to the selected reference location selected by a user on the 'where to search' screen of Figure 8. That is the search will be carried out with respect to the selected location, which selected reference location will be:
at a location near the current location of the navigation device 200, where the '@ Location near you' button is actuated on the 'where to search' screen of Figure 8 to get to the 'What' screen of Figure 11;
at a location near the desired city, selected by the user, when the '@ Location in city' button is actuated on the 'where to search' screen of Figure 8 and a desired city is selected, as is described above using the 'Select a city' screen of Figure 10;
at a location near the user's home, where the '@ Location near home' button is actuated on the 'where to search' screen of Figure 8 to get to the 'What' screen of Figure 11;
at locations along the route currently being navigated by the device 200, where the '@ Location along route' button is actuated on the 'where to search' screen of Figure 8 to get to the 'What' screen of Figure 11;
at a location near the destination currently being navigated to by the navigation device 200 where the '@ Location near destination' button is actuated on the 'where to search' screen of Figure 8 to get to the 'What' screen of Figure 11; and at a location near the last location found by the OTA local search service, in this example, near B v Bem Marnixstaat, where the '@ B v Bem Marnixstraat' button is actuated on the 'where to search' screen of Figure 8 to get to the 'What' screen of Figure 11.

When presented with the 'What' screen of Figure 11, the user actuates the keys on the qwerty keyboard area 520 of the 'What' screen to type in, a search text, describing the type of service they require and which may be located at a destination unknown to them. In this example, the user is looking for an unknown destination at which to purchase some gas and so types a search text 'gas', which as is shown on the 'What' screen of Figure 12, is displayed in a display area 524. If the user wishes to proceed with a search based on the search text they have typed in the display area 524, they actuate the 'OK' button 522 of the 'What' screen to initiate a search. If the user wishes to cancel a search based on the search text they have typed in the display area 524, they actuate the 'Cancel' button 526 of the 'What' screen. If the user wishes to go back to the previously displayed screen, they actuate the 'Back arrow' button 528 of the 'What' screen of Figure 11.

When the user selects the 'OK' button 522 of the 'What' screen of Figure 11 to initiate a search, a search will be performed by accessing and using a generic remote map search server 530, ie. a server not dedicated to the navigation system within which the navigation device operates, such as an internet service provider's (ISP) map search server, via a communications network connection. For example, the ISP's map search server 530 may be the Google™ maps search server.

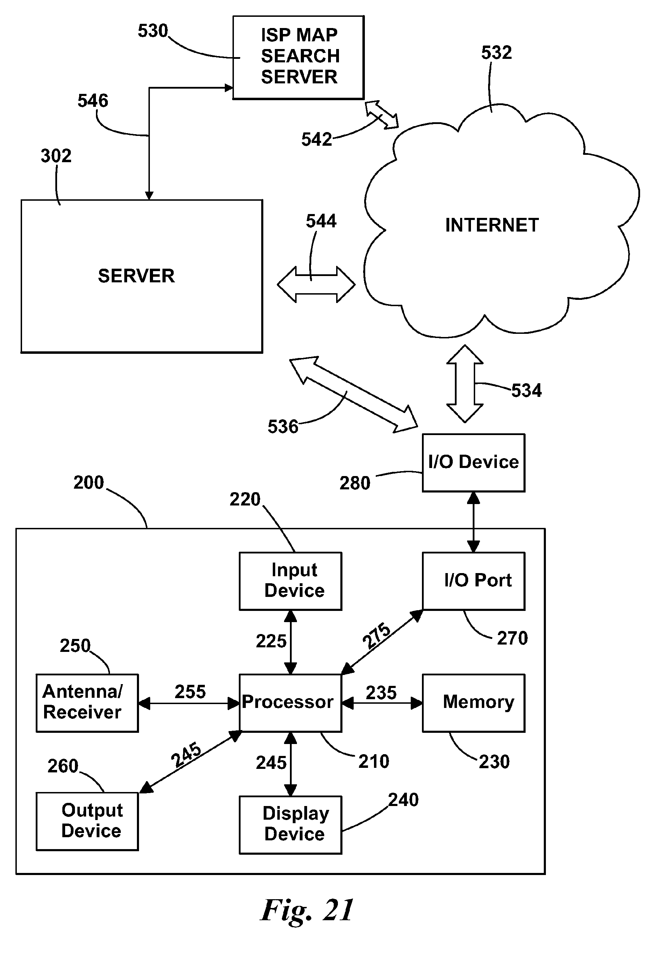

Figure 21 shows the navigation device 200 of Figure 2, with like parts labelled with like numerals, in which the input/output (I/O) device 280 can support a data connection between the navigation device and the internet 532, as is described above. In this example, the I/O device 280 supports a data connection between the navigation device 200 and the ISP map search server 530, via the internet 532, with the internet connected to the ISP map search server 530 via a communications channel 542. For example, the I/O device 280 may be a mobile phone or other device supporting internet connectivity. The navigation device 200 can then be connected to the internet 532 via communications channel 534, or to the dedicated server 302 via communications channel 536 via I/O device 280.

In addition, or alternatively to a data connection 534 between the I/O device 280 and the internet 532, the dedicated server (302) of Figure 21 may support a data connection between itself and the internet 532, via communications channel 544, as is shown in Figure 21. A data connection can then be supported between the dedicated server 302 and the ISP map search server 530 via the internet 532, with the internet connected to the ISP map server 530 via a communications channel 542. Alternatively, a data connection 546 between the dedicated server 302 and the ISP map search server 530 may be made over a network connection 546, which may, for example, be supported by a private dedicated network.

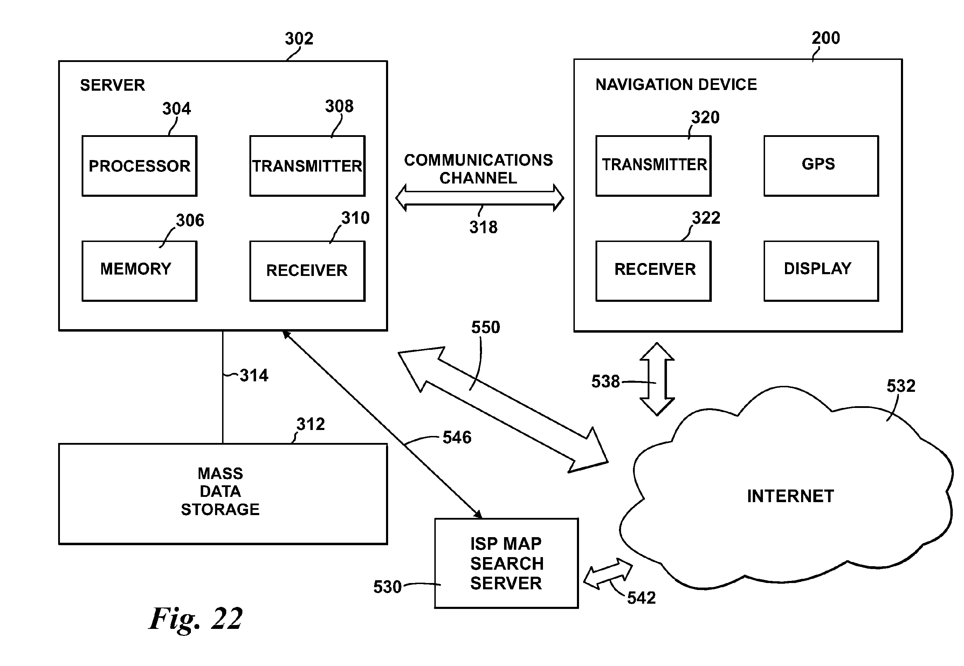

Figure 22 shows the navigation device 200, dedicated server 302 and mass storage device 312 arrangement of Figure 3, in which the navigation device can support a data connection between the navigation device and the internet 532, for example via transmitter and receiver arrangement (320, 322). The navigation device 200 can then be connected to the internet 532 via communications channel 538 or to the dedicated server 302 via communications channel 318.

In addition, or alternatively to a data connection 538 between the navigation device 200 and the internet 532, the dedicated server 302 of Figure 22 may support a data connection between itself and the internet 532, via communications channel 550, as is shown in Figure 22. A data connection can then be supported between the server 302 and the ISP map search server 530 via the internet 532, with the internet connected to the ISP map server 530 via a communications channel 542. Alternatively, a data connection 546 between the dedicated server 302 and the ISP map search server 530 may be made over a network connection 546, which may, for example, be supported by a private dedicated network.

Thus, the arrangements of Figures 21 and 22 show examples of how a network connection an be supported between the navigation device 200 and the map search server 530.

When the user of the navigation device initiates a search by actuating the 'OK' button on the 'What' screen of Figure 12, the OTA local search module 490 responsive to the processor 210 of the navigation device 200 generates a server call message, including:
the reference location, that is the reference location selected by a user via the 'where to search' screen of Figure 8, as is described above. The reference location may be defined in terms of latitude and longitude; and
the search text the user typed into the 'What' screen of Figure 12; and in this example, the server call message also includes:
   a limit X on the number of search results to be returned;
   the language of the user interface of the navigation device 200, in this example, English; and
   optionally a search universe indicator, for example, whether the search is limited to a search for businesses, limited to a search for 5 star rated results, etc.

The server call message is then sent to the map search server 530 via the network connection between the navigation device 200 and the map search server. The network connection may be via the internet 532, the server 302 and/or the connection 546 of Figures 21 and 22, as is described above. The map search server 530, for example Google™ maps, will implement a search based on the contents of the server call message to generate a set of search results and generates a search results message including the search results, and sends the results message to the navigation device 200 via the network connection. Generally, each search result will relate to an entity, such as a business.

Each search result generally contains:
a name which identifies the entity, for example, the business name of the entity; location coordinates (for example, latitude and longitude) for the entity; and in this example the search results also contain:
   a rating for the entity;
   whether the entity is a sponsored entity; and
   the phone number of the entity.

The search result message may in addition, or alternatively contain a suggested search text if no search results are returned, an insufficient number of search results are returned or if an insufficient number of search results are returned which are close to the reference location.

As indicated above, the server call message may include an additional criterion of limiting the number of search results, for example to a number X or less, to be returned by the map search server 530 in the search results message. This has the advantage of reducing the bandwidth required to send the search results message and/or of speeding up receipt of the search results message by the navigation device 200. However, it has a disadvantage that an additional server call message may have to be sent to the map search server 530 for more search results if none of the limited number of returned search results are of use to the user.

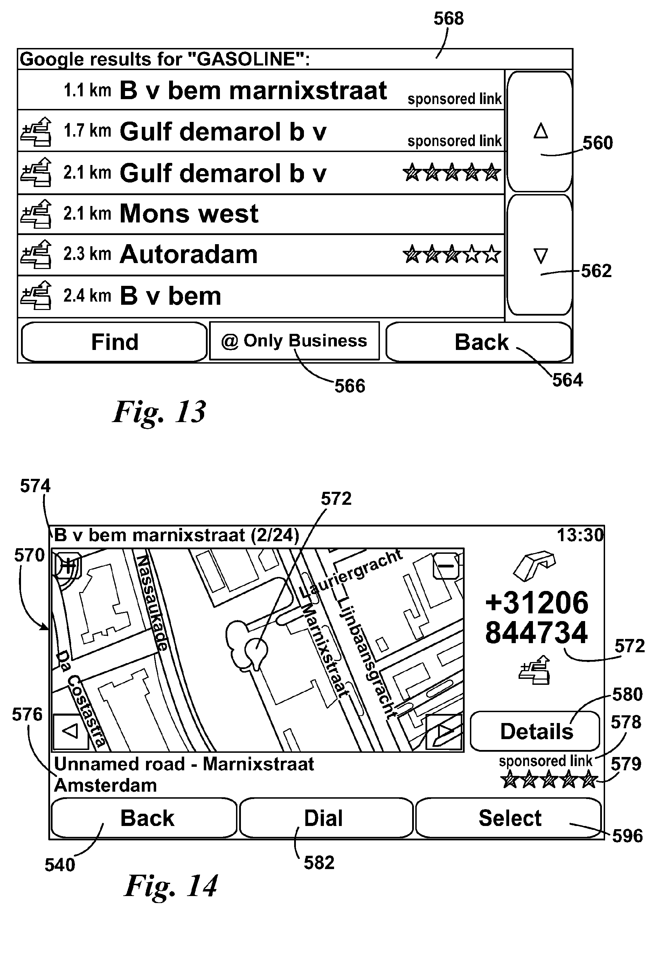

The search results are generally ordered by the map search server 530 in the search results message in order of relevance to the criteria included in the server call message. The OTA local search module 490 operates within the navigation device 200 with the processor 210, to display on the display device 240 of the navigation device, a set of search results contained in the received results message as a 'Search results' screen, shown in Figure 13.

The search results may be listed on the 'Search results' screen ordered in the same way the search results were ordered by the map search server 530 in the search results message. The searches in relation to the reference location (selected by the user on the on the 'where to search' screen of Figure 8) have a single reference location, except those searches where the reference location is along the route (selected by the user actuating the '@ Location along route' button on the 'where to search' screen of Figure 8). Where the search has a single reference location, the search results returned by the map search server 530 are generally ordered by distance from the reference location, with the closest search result first.

Each search result in the set of search results will relate to a located entity (such as a business offering a service specified in search text) and as shown in Figure 13, the OTA local search module 490 operating with processor 210 of the navigation device 200 will display each search result on the 'Search results' screen. In the 'Search results' screen of Figure 13, the displayed search results are displayed line by line, with one result on each line. It will be apparent that the search results could be displayed in a different arrangement. Each displayed search result displayed on the 'Search results' screen of Figure 13 includes:
a name which identifies the entity, for example, the business name of the entity, for example, B v bem Marnixstraat is the name of the entity listed first on the 'Search results' screen in Figure 13;
a distance between the reference location and the location of the entity (where there is a single reference location) or a shortest distance between the route the navigation device is currently navigating along and the location of the entity (where the reference location is a route). For example 1.1 km in the example of B v bem Marnixstraat on the top line of the 'Search results' screen in Figure 13;
a rating for the entity, for example the number (eg. 0 to 5) of stars displayed adjacent the third and fifth listed entity on the 'Search results' screen of Figure 13; and
whether the entity is a sponsored entity, as shown for the first two listed entities on the 'search results' screen of Figure 13.

In addition, where the reference location is a route, as opposed to a single location, the displayed search results on the 'search results' screen may also include an indication, for each search result of whether the entity named in the search result is on route, near the route or off the route, but this is not shown in Figure 13.

The number of characters in the name of the entity, as displayed on the 'Search results' screen may be limited by the OTA local search module 490. For example, the number of characters might be limited to a number, for example, less than 40.

Where the server call message to the map search server 530 does not limit the number of search results returned, then the OTA local search module 490 operating in the navigation device 200 may limit the number of search results which are displayed on the 'Search results' screen and in addition may display a 'more' button (not shown in the Figures) which the user can actuate to instruct the navigation device reveal more search results. Where the server call message to the map search server 530 limits the number of search results returned, then actuation of the 'more' button, causes the OTA local search module to initiate sending of a further server call message to initiate the retrieval of additional search results from the map search server 530.

The OTA local search module 490 may limit the number of search results retrieved from the map search server 530 and/or displayed on the 'search results' screen to a number X, for example, X = 11, which in the present example can be displayed in two pages of the 'Search results' screen of Figure 13, or X = 17, which in the present example can be displayed in three pages of the 'Search results' screen. Where the reference location is a single location, then the top 11 search results have a high change of including a search result which is of use to the user.

The user can scroll along the search results displayed on the pages of the 'Search results' screen of Figure 13, by actuating the scroll up button 560 or scroll down button 562. The user is directed back to the 'What' screen of Figure 11, on actuation of the 'Back' button 564 of Figure 13. In addition, if the user wants to limit the results of the search to businesses only, then that can actuate the '@ Only Business' button 566 of the 'Search results' screen of Figure 13, in order to generate a further call server message with a search universe indicator, limiting the search results to businesses only. In addition the 'search results' screen of Figure 13 might include an '@ Only 5 star' button, actuation of which would generate a further search call server message with a search universe indicator, limiting the search results to 5 star entities only. In the example of Figure 13, the 'Find' button, when actuated by a user would present an additional screen allowing the user to filter the search results for a specific entity in the search results.

Where no search results are found by the map search server, an insufficient number of search results are found by the map search server (for example, less than X), or an insufficient number of search results (for example, less than X) are found by the map search server which are less than a predetermined distance from the reference location (for example 200km), then the search results message may include (in addition to details of any search results) a suggested search text. The OTA local search module 490 and processor 210 working with the navigation device 200 will then display the search results returned from the map search server (if any) on the 'Search results' screen of Figure 13 along with a line at the end of the search results stating "did you mean" followed by the suggested search text. If no search results are returned by the map search server, then the first line of the search results as displayed on the 'Search results' screen would state "did you mean" followed by the suggested search text. These suggestions come from the map search server 530 in the search results message, for example the Google™ server will send a suggested search text, where no or only a few search results are located. This can enable the user to initiate a further search more easily, for example, when the user has made a typing error when entering the search text into the 'What' screen of Figure 11. To initiate the further search the user would simple actuate the appropriate "did you mean" line displayed on the 'search results' screen, for example where a touch sensitive display is used, the user would touch the appropriate "did you mean" line.

In this example, although the phone number of the entity is included in the search results message from the map search server 530, it is not displayed on the 'search results' screen of Figure 13. The title (568) of the 'search results' screen of Figure 13 displays the search string as shown, in this case "Gasoline" and may also display the number of search results X displayed on the 'search results screen' as well as the total number of search results Y located in the search carried out by the map search server 530, for example it may display 'X out of Y matches'.

From the 'search results' screen of Figure 13, the user can actuate a search result line, for example with a touch sensitive display the user touches the line showing the search result in which they are interested. In this example, the user actuates the search result line showing 'B v bem Marnixstraat' and in response to this the OTA local search module 490 operating with the processor 210 in the navigation device 200 dispays the 'location info' screen of Figure 14 on the display device 240 of the navigation device 200.

The 'location info' screen of in the example of Figure 14 shows:
a map 570 displaying the location 572 of the entity;
the phone number 572 for the entity (if available) as returned in the search results message by the map search server 530;
the name of the entity in the title 574 for the 'location info' screen, in this example 'B v bem Marnixstraat';
the address 576 of the entity, in this example 'Unnamed road - Marnixstraat Amsterdam';
where the '@ Location along route' button of the 'where to search' screen of Figure 8 was actuated to get to the 'What' screen of Figure 11, an indication (not shown in Figure 14) can be displayed showing whether the location of the entity is on the route, near the route or off the route currently being navigated by the navigation device 200;
a sponsor symbol 578 indicating whether or not the entity is a sponsored entity; and
a star rating 579, which may reflect end user's ratings of the entity.

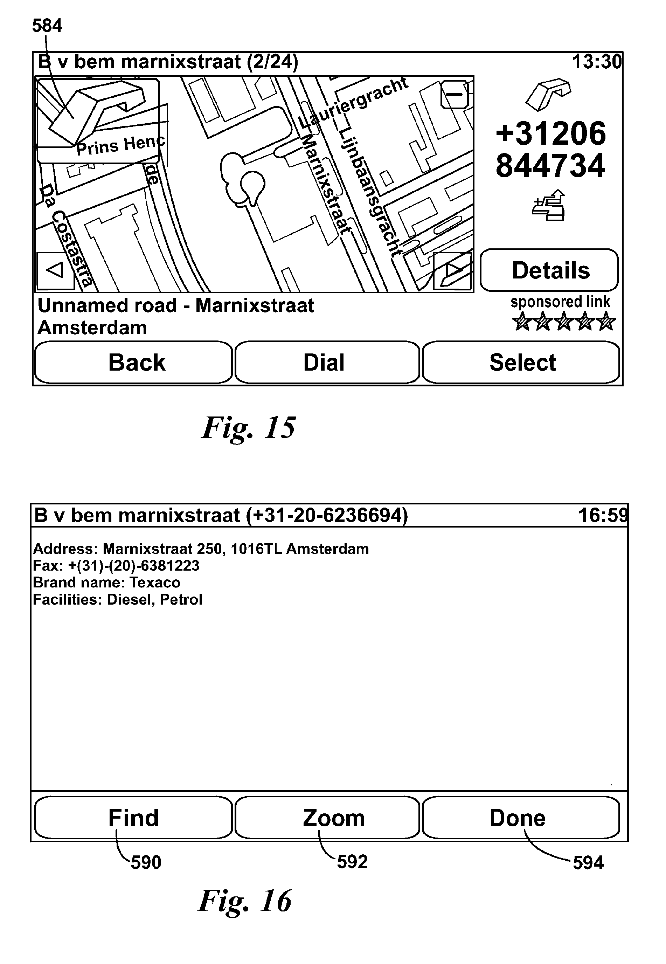

Only data available from the search results message received from the map search server 530 is displayed on the 'location info' screen of Figure 14. If the user requires any further information about the entity, then the user actuates the 'Details' button 580 on the 'location info' screen. On actuation of the 'Details' button by the user additional information is retrieved about the entity from the map search server 530, via the network connection, which is then displayed on the 'location detail' screen of Figure 16. Scroll buttons will appear on the 'location detail' screen where the additional retrieved information does not fit onto the screen.

In the example of Figure 16, the 'Find' button 590 allows the user to search for a string in the text making up the additional information displayed on the 'location detail' screen. The 'Zoom' button 592 allows the user to zoom in and out of the 'location detail' screen. Actuation by the user of the 'Done' button 594 of Figure 16 causes the 'location info' screen of Figure 14 to again be displayed on the display device 240 of the navigation device 200.

Actuation of the 'Back' button 540 on the 'location info' screen of Figure 14 results in the display device 240 of the navigation device 200 displaying the 'search results' screen of Figure 13.

If the navigation device 200 is connected to an I/O device 280 which supports mobile phone functionality, for example where the I/O device 280 is a mobile phone or if the navigation device has mobile phone functionality, as is described above, then actuation of the 'Dial' button 582 of Figure 14 results in the mobile phone functionality making a mobile phone call to the entity. A 'dial a location' screen shown in Figure 15 is then displayed on the display device 240 of the navigation device 200, which is similar to the 'location info' screen but in addition displays a 'phone icon' 584. Once the mobile phone connection is made to the entity, the user can converse with a representative of the entity.

Alternatively, the user may type an address of a known destination into the 'What' screen of Figure 11, for example, to find out more information, such as a phone number, associated with the address. For example, when the Google™ searching site receives a server call message with an address as a search text, it will locate a specific single location associated with the address, rather than a list of results. In this case, OTA local search module 490 working with the processor 210 in the navigation device 210 will cause the display device 240 to display the 'Location info' screen of Figure 14 and will miss out the step of showing the 'search results' screen. In this case, the 'Back' button 540 on the 'Location info' screen, when actuated takes the user back to the 'What' screen of Figures 11 and 12.

As described above in relation to Figures 5b and 5c, when the navigation device 200 incorporates the OTA search service according to the present invention, the user can actuate the 'Navigate to' button on the screen to Figure 5b to move to the screen of Figure 9 in place of the screen of Figure 5c. The screen of Figure 9 is similar to that of Figure 5c except that it additionally includes the Google™ branded button 502. Where the user accesses the screen of Figure 9 from the 'Navigate to' screen, such as that shown in Figure 5b and carries out an OTA local search, as is described above and arrives at the 'location info' screen of Figure 14, then actuation of the 'Select' button 596 from the 'location info' screen will initiate navigation to the selected entity from the search results, in this example B v bem Marnixstaat.

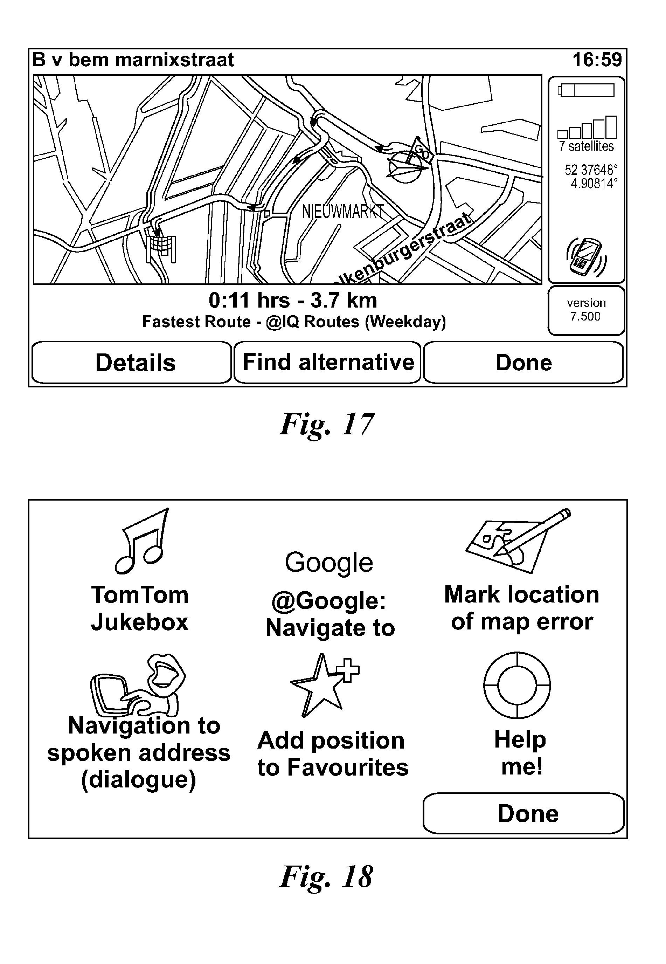

In this example, the navigation device 200 will display the 'navigate to search result' screen of Figure 17, which is equivalent to that described above in relation to Figure 5i, but with an alternative destination.

Alternatively, the user may initiate a search, in the same way as is described above from an 'Add favorite' screen, in which case actuation of the 'Select' button 596 from the 'location info' screen of Figure 14 will result in the details of the selected entity, in this example B v bem Marxstraat being stored in a memory 230 of the navigation device 200 as a new favourite destination.

Where the navigation device 200 incorporates the OTA local search service described above, the '3D navigation' screen of Figure 6 will include a 'quick menu' button 504. When the 'quick menu' button 504 is activated the display device 240 of the navigation device 200, in this example, displays the 'quick menu' screen shown in Figure 18. As shown in Figure 18, the 'quick menu' screen displays an '@ Google: navigate to' button, with an icon showing the Goggle™ logo. Actuation of the '@ Google: navigate to' button causes the navigation device to show the 'Where to search' screen of Figure 8, from which the user carries out the procedure described above to carry out a local search and arriving at the 'location info' screen of Figure 14, can press the 'Select' button 596 to navigate to the selected entity, as is described above in relation to Figure 17.

The navigation device 200 can be actuated by the user to display a map browser screen, an example of which is shown in Figure 7. By actuating the 'Find' button 600 from the map browser screen, the 'location selector' screen of Figure 9 is displayed and the user can initiate the OTA local search service by actuating the 'Google™ branded' button 502, as described above until reaching the 'search results' screen of Figure 13. In this example, the user actuates the second line of the search results in Figure 13 for the entity 'Gulf demarol b v' and the navigation device displays the search result on a 'search results on map' screen, as is shown on Figure 19, with the location identified by a Google™ specific balloon icon 602. Actuation by the user of the balloon icon 602, results in the 'location info' similar to that of Figure 14, to be displayed on the display device of the navigation device, except for the alternate selected entity 'Gulf demarol b v'.

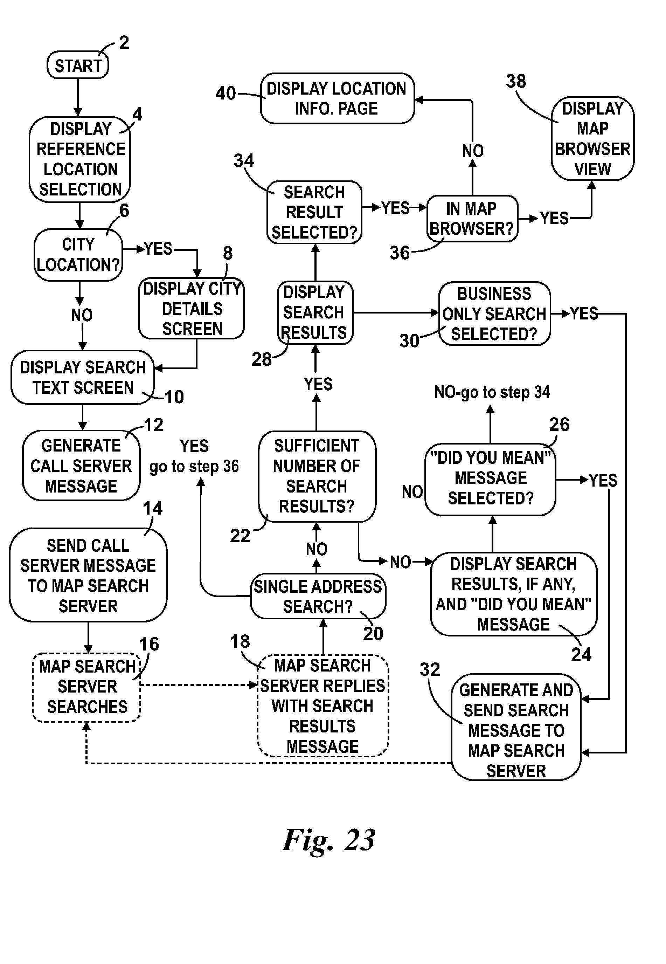

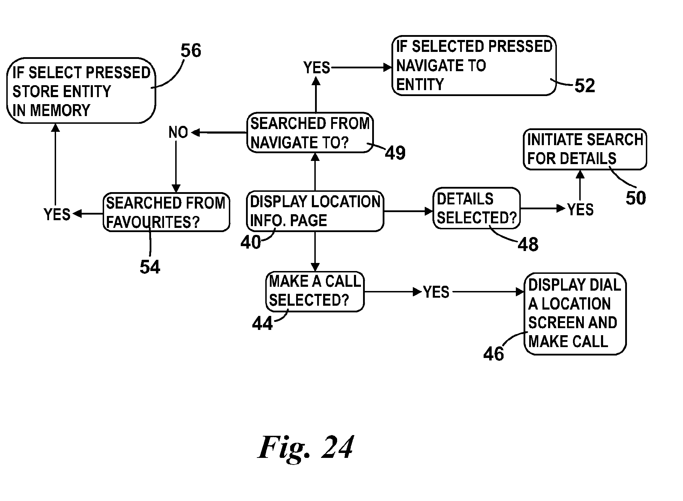

Referring now to Figures 20 and 21 of the accompanying drawings, the memory resource 230 stores a boot loader program (not shown) that is executed by the processor 210 in order to load an operating system 470 from the memory resource 230 for execution by functional hardware components 460, which provides an environment in which application software 480 can run. The operating system 470 serves to control the functional hardware components 460 and resides between the application software 480 and the functional hardware components 460. The application software 480 provides an operational environment including the graphical user interface GUI that supports core functions of the navigation device 200, for example map viewing, route planning, navigation functions and any other functions associated therewith. In accordance with the preferred embodiment of the present invention, part of this functionality comprises an OTA local search module 490, the function of which will now be described in detail in connection with Figures 23 and 24.

Figures 23 and 24 are schematic flow diagrams illustrating steps of a method by which the teachings of the present invention, in particular the functionality of the aforementioned OTA local search module 490, may be implemented. The method that will now be described is particularly relevant to, but not limited to, a navigation device 200 that comprises a PND which is being used by a user who wishes to navigate along a route to a destination location.

In Figure 23, the user initiates a search, at step 2, for an unknown destination, for example by accessing the 'where to search' screen of Figure 8, for example from the 'location selector' screen of Figure 9, the 'navigation view' screen of Figure 6, the 'quick menu' screen of Figure 18 or the map browser view of Figure 7 (via the 'location selector' screen of Figure 9). According to the method a user can select a reference location. In the present example, the 'where to search' screen of Figure 8 displays a selection of reference locations which a user can select, at step 4. Where the user selects the '@ Location in city' option, step 6, the 'select a city' screen of Figure 10 is displayed, at step 8, so that the user can select a city as a reference location. With the reference location selected, at steps 4 to 8, a screen into which a search text can be input is displayed, for example, the 'what' screen of Figure 11 is displayed, at step 10, so that the user can input a search text as shown in Figure 12. According to the method, a call server message is generated, at step 12, and is then sent, at step 14, to the map search server 530 over a network connection. The steps of the method which take place outside of the navigation device 200, are shown in dotted lines in Figure 23. The map search server then conducts a search, at step 16, based on the reference location selected by the user at steps 2 to 8 and on the search text input by the user at step 10. The map search server replies to the navigation device 200 with a search results message, at step 18. In this example, a decision is made whether the search results comprise a single address search, step 20, and if yes, the method skips to step 36. If no, the method goes to step 22 and according to this example a decision is made whether the number of search results returned by the map search server 530 is sufficient.

If the number of search results returned is significantly less than X, the search results, if any, are displayed, for example on the 'search results' screen of Figure 13 along with the 'did you mean' message, at step 24. The 'search results' screen provides an option for the user to select the 'did you mean' message, at step 26, and if this is selected, the search string in the 'did you mean' message is used to generate and send a further search message to the map search server 530, at step 32 and the method skips back to step 16. If the 'did you mean' message is not selected, the method skips to step 34.

If the number of search results returned is not significantly less than X, the search results are displayed, at step 28, for example, on the 'search results' screen of Figure 13.

From the 'search results' screen the user is provided with an option of limiting the search universe, in the example of Figure 23, by selecting the business only search, at step 30, by actuating the '@ Only Business' button 566, from the 'search results' screen of Figure 13. If the business only search option is selected, then a search message refining the search to businesses only is generated and sent to the map search server 530, at step 32 and the method skips back to step 16.

From the 'search results' screen the user can select a search result, at step 34. In this example, if the search was initiated at step 2, from the map browser screen, for example as shown in Figure 7 via the 'location selector' screen of Figure 9 then a map browser view, for example, as shown in Figure 19 is displayed, at step 38. Otherwise, the location information is displayed, at step 40, for example as shown on the 'location info' screen of Figure 14.

The remaining method steps are shown in Figure 24, beginning at step 40, with the display of location information.

In the example of Figure 14, the 'location info.' screen displays an option to make a call to the entity displayed, the user may decide to select this option at step 44, and then a call is made from the navigation device 200, to the entity, at step 46, and in the example of Figure 15, the 'dial a location' screen is displayed.

In the display of location information, the user may be prompted with an option to obtain more details about the entity displayed, step 48, as shown, for example, at Figure 14 by the 'Details' button 580. If the user elects to obtain more details about the entity, a search is initiated, at step 50.

The user may opt to navigate to the entity located in the search at steps 49 and 52. In the example of Figure 14, if the search was initiated at step 2 from a navigation screen of the navigation device 200, step 49, actuating the 'Select' button 596 of Figure 14 will result in the navigation device 200 navigating to the entity, step 52.

The user may opt to store the details of the entity related to the selected search result in the memory 230 of the navigation device 200, at steps 54 and 56. In the example of Figure 14, if the search was initiated at step 2 from a favourites screen of the navigation device 200, step 54, actuating the 'Select' button 596 0f Figure 14 will result in the navigation device 200 storing the details of the entity in the memory 230.

It will be appreciated that whilst various aspects and embodiments of the present invention have heretofore been described, the scope of the present invention is not limited to the particular arrangements set out herein and instead extends to encompass all arrangements, and modifications and alterations thereto, which fall within the scope of the appended claims.

For example, whilst embodiments described in the foregoing detailed description refer to GPS, it should be noted that the navigation device may utilise any kind of position sensing technology as an alternative to (or indeed in addition to) GPS. For example the navigation device may utilise using other global navigation satellite systems such as the European Galileo system. Equally, it is not limited to satellite based but could readily function using ground based beacons or any other kind of system that enables the device to determine its geographic location.

It will also be well understood by persons of ordinary skill in the art that whilst the preferred embodiment implements certain functionality by means of software, that functionality could equally be implemented solely in hardware (for example by means of one or more ASICs (application specific integrated circuit)) or indeed by a mix of hardware and software. As such, the scope of the present invention should not be interpreted as being limited only to being implemented in software.

## Claims

1. A navigation device (200) comprising:
a processor (210);
a display (240) controllable by the processor to display a screen with a plurality of selectable options, each selectable option being associated with at least one reference location;
an input interface (220,240) controllable by the processor, the input interface being configured to enable a user to select at least one reference location by selecting one of the plurality of selectable options; and
an over the air (OTA) search module (490) for generating a server call message comprising the at least one reference location and a search text for transmission to a remote map search server (530) and for receiving a search results reply message comprising one or more search results from such a remote map search server (530) based on the at least one reference location and the search text, and the processor (210) being responsive to the OTA search module (490) to control said display (240) to display the search results to the user,
wherein the processor (210) is further configured to implement route planning functionality to calculate a route from a start position to a destination position
**characterised in that**:
the input interface is additionally configured to enable a user to input the search text; and
wherein the route is associated with one of the plurality of selectable options, the route comprising a plurality of reference locations, and the processor (210) is further configured, upon selection of the selectable option associated with the route, to control said display (240) to display an indication, for each search result, whether the search result is on the route, near the route or off the route.

2. A navigation device according to claim 1, wherein a search result in the search results reply message relates to an entity and lists the name of the entity and the location of the entity.

3. A navigation device according to claim 1 or 2, in which a search result of the search results displayed to the user on the display (240) is selected by a user by operation of the input interface (220) and the user interface (240) provides options to a user concerning operation of the navigation device (200) in relation to the selected search result.

4. A navigation device according to clam 3, wherein a said option comprises the option of controlling the navigation device (200) to navigate the user to a location of an entity to which the search result relates.

5. A navigation device according to claim 3, wherein the navigation device comprises a memory (230) and a said option comprises the option of the navigation device (200) storing the selected search result in the memory.

6. A navigation device according to claim 3, wherein a said option comprises the option of the OTA search module generating a server call message listing:
an entity the selected search result relates to; and
a request for more details about the entity for transmission,
to such a remote map search server (530) and for receiving a search results reply message from such a remote map search server (530) based on the entity and the request and the processor (210) being responsive to the OTA search module (490) to control said display (240) to display additional details about the entity to the user.

7. A navigation device according to any one of the preceding claims, comprising an antenna (250) and a receiver (250) for receiving data signals via said antenna, wherein said processor (210) is configured to determine from the received signals a current location of the navigation device.

8. A navigation device according to any one of the preceding claims additionally comprising or connected to network connection functionality (320,322,280) and the processor (210) is configured to control the OTA search module (490) and the network connection functionality to transmit the server call message to such a map search server (350) and receive the search results message from such a map search server over a network connection (532,534,536,538,542,546,550).

9. A navigation device according to claim 8, wherein the network connection functionality (320,322,280) comprises mobile phone functionality and the search results message comprises a phone contact number of an entity to which at least one of the search result relates, and in which a search result of the search results displayed on the display (240) is selected by a user by operation of the input interface (220) and the input interface (220) controlled by the processor (210) provides an option to a user to dial the phone contact number of the entity using the mobile phone functionality.

10. A navigation device according to any one of the preceding claims additionally comprising a transmitter (320) and a receiver (322) via which the navigation device communicates with a dedicated server (302), wherein the processor (210) is configured to control the OTA search module (490) to transmit the server call message to the server and receive the search results message from the server and the server (302) is configured to communicate with such a map search server via a network connection (536,546,550,532,542).

11. A navigation device according to any one of claims 8 to 10, wherein the network connection is via the internet.

12. A navigation device according to any one of the proceeding claims, wherein the server call message additionally comprises an instruction limiting the number of search results returned in the search results message.

13. A navigation device according to any one of the preceding claims, wherein the processor (210) is further configured, upon selection of the selectable option associated with the route, to control said display (240) to display, for each search result, a shortest distance between the route and the location associated with the search result.

14. A navigation system comprising a navigation device (200) according to any one of the preceding claims and a remote map server (530) with which the navigation device (200) can communicate over a network connection (532,534,536,538,542,546,550).

15. A navigation method for locating an unknown destination in a navigation device (200) comprising route planning functionality, the method comprising the steps of:
calculating a route from a start position to a destination position;
a user selecting a selectable option via a user interface (220,240) of the navigation device from a plurality of selectable options displayed on a screen, each selectable option being associated with at least one reference location, the selected option being associated with the route, the route comprising a plurality of reference locations;
a user inputting a search text indicative of the unknown destination;
the navigation device (200) generating a server call message listing the plurality of reference locations associated with the route and the search text for transmission to a remote map search server (530) and receiving a search results reply message comprising one or more search results from such a remote map search server (530) based on the plurality of reference locations associated with the route and the search text; and
the navigation device (200) displaying the search results to a user on the display device (240) of the navigation device, and displaying an indication, for each search result, whether the search result is on the route, near the route or off the route.

16. A method according to claim 15, wherein, upon selection of the selectable option associated with the route, the navigation device displaying on the display device (240), for each search result, a shortest distance between the route and the location associated with the search result.

17. Computer software comprising one or more software modules operable, when executed in an execution environment, to cause the processor (210) of a navigation device (200) to perform the navigation method of claim 15 or 16.

## Patentansprüche

1. Eine Navigationsvorrichtung (200), umfassend:
einen Prozessor (210);
eine Anzeige (240), steuerbar durch den Prozessor indem ein Bildschirm angezeigt wird mit einer Vielzahl von auswählbaren Optionen, wobei jede wählbare Option mit wenigstens einem Referenzort assoziiert ist;
eine Eingabeschnittstelle (220, 240) steuerbar durch den Prozessor, die Eingangsschnittstelle ist konfiguriert, um es einen Benutzer zu ermöglichen wenigstens einen Referenzort durch Auswählen einer der Mehrzahl von auswählbaren Optionen auszuwählen; und
eine über die Luft (OTA) Suchmodul (490) zum Erzeugen einer Serveranrufnachricht umfassend den wenigstens einen Referenzort und einen Suchtext zur Übertragung an einen entfernten Kartensuchserver (530) und zum Empfangen einer Suchergebnisseantwortnachricht umfassend eine oder mehrere Suchergebnisse von einem solchen entfernten Kartensuchserver (530) basierend auf wenigstens einen Referenzort und den Suchtext, und der Prozessor (210) ist reagierend auf das über die Luft (OTA) Suchmodul (490), um besagte Anzeige (240) zu kontrollieren, um das Suchergebnis dem Benutzer anzuzeigen,
wobei der Prozessor (210) des Weiteren konfiguriert ist eine Routenplanungs- funktionalität zu implementieren, um eine Route von einer Startposition zu einer Zielposition zu berechnen
**dadurch gekennzeichnet, dass:**
die Eingabeschnittstelle ist zusätzlich konfiguriert einen Benutzer es zu ermöglichen einen Suchtext einzugeben; und
wobei die Route assoziiert ist mit einer der Mehrzahl von auswählbaren Optionen,
wobei die Route eine Mehrzahl von Referenzorten umfasst, und der Prozessor (210) des Weiteren konfiguriert ist, nach Auswahl der auswählbaren Option assoziiert mit der Route, besagte Anzeige (240) zu kontrollieren, um eine Meldung anzuzeigen, für jedes Suchergebnis, ob das Suchergebnis auf der Route ist, in der Nähe der Route ist oder abseits der Route ist.

2. Eine Navigationsvorrichtung nach Anspruch 1, wobei ein Suchergebnis in der Suchergebnisseantwortnachricht auf eine Einheit zugeordnet ist und den Namen der Einheit und den Ort der Einheit auflistet.

3. Eine Navigationsvorrichtung nach Anspruch 1 oder 2, bei dem ein Suchergebnis von den für den Benutzer auf der Anzeige (240) angezeigten Suchergebnissen von einem Benutzer ausgewählt wird durch Betätigung der Eingabeschnittstelle (220) und der Benutzerschnittstelle (240), Optionen für einen Benutzer bereit hält die den Betrieb der Navigationsvorrichtung (200) betreffen in Bezug auf das gewählte Suchergebnis.

4. Eine Navigationsvorrichtung nach Anspruch 3, wobei eine besagte Option die Möglichkeit umfasst, die Navigationsvorrichtung (200) zu steuern, um den Benutzer zu einem Ort von einer Einheit zu navigieren, auf welches sich das Suchergebnis bezieht.

5. Eine Navigationsvorrichtung nach Anspruch 3, wobei die Navigationsvorrichtung einen Speicher (230) umfasst und besagte Möglichkeit die Möglichkeit der Navigationsvorrichtung (200) umfasst, um ein ausgewähltes Suchergebnis in dem Speicher zu speichern.

6. Eine Navigationsvorrichtung nach Anspruch 3, wobei besagte Möglichkeit die Möglichkeit des (OTA) Suchmodul umfasst, um eine Serveranrufnachricht zu generieren, auflistend:
eine Einheit zu welchem das gewählte Suchergebnis sich bezieht; und
eine Anfrage für weitere Details über die Einheit für die Übertragung,
auf einen solchen entferntem Kartensuchserver (530) und zur Aufnahme einer Suchergebnisseantwortnachricht von einem solchen entfernten Kartensuchserver (530), basierend auf der Einheit und der Anfrage und dem Prozessor (210), welcher antwortend ist auf das (OTA) Suchmodul (490), um besagte Anzeige (240) zu kontrollieren, um zusätzliche Details über die Einheit dem Benutzer anzuzeigen.

7. Eine Navigationsvorrichtung nach einem der vorhergehenden Ansprüche, umfassend eine Antenne (250) und einen Empfänger (250) zum Empfangen von Datensignalen über die genannte Antenne, wobei besagter Prozessor (210) konfiguriert ist, um aus den empfangenen Signalen eine aktuelle Position der Navigationsvorrichtung zu bestimmen.

8. Eine Navigationsvorrichtung nach einem der vorhergehenden Ansprüche, zusätzlich umfassend oder verbunden zu Netzwerkverbindungsfunktionalität (320, 322, 280), und der Prozessor (210) ist konfiguriert, um das (OTA) Suchmodul (490) zu kontrollieren, und die Netzwerkverbindungsfunktionalität, um die Serveranrufnachricht an solchen Kartensuchserver (350) zu übertragen und die Suchergebnissenachricht von einem solchen Kartensuchserver über die Netzwerkverbindung (532, 534, 536, 538, 542, 546, 550) zu erhalten.

9. Eine Navigationsvorrichtung nach Anspruch 8, bei dem die Netzwerkverbindungsfunktionalität (320, 322, 280) Mobilfunkfunktionalität umfasst und die Suchergebnissenachricht eine Telefonkontaktnummer einer Einheit umfasst, auf die sich zumindest eines der Suchergebnisse bezieht, und in welchem ein Suchergebnis der Suchergebnisse, welches auf der Anzeige (240) angezeigt wird, von einem Benutzer ausgewählt wird durch die Betätigung der Eingabeschnittstelle (220) und die Eingangsschnittstelle (220), welche durch den Prozessor (210) gesteuert wird, stellt eine Möglichkeit zu einem Benutzer bereit, die Telefonkontaktnummer von der Einheit durch Benutzen der Mobilfunkfunktionalität zu wählen.

10. Eine Navigationsvorrichtung nach einem der vorhergehenden Ansprüche, zusätzlich umfassend einen Sender (320) und einen Empfänger (322) mittels welcher die Navigationsvorrichtung mit einem ausgesuchten Server (302) kommuniziert, wobei der Prozessor (210) konfiguriert ist das (OTA) Suchmodul (490) zu kontrollieren, um die Serveranrufnachricht an den Server zu übermitteln und die Suchergebnissenachricht von dem Server zu erhalten, und der Server (302) ist konfiguriert, um mit einem solchen Kartensuchserver über eine Netzwerkverbindung (536, 546, 550, 532, 542) zu kommunizieren.

11. Eine Navigationsvorrichtung nach einem der Ansprüche 8 bis 10, wobei die Netzwerkverbindung über das Internet ist.

12. Eine Navigationsvorrichtung nach einem der vorhergehenden Ansprüche, wobei die Serveranrufnachricht zusätzlich eine Anweisung enthält, um die Anzahl der Suchergebnisse in der zurück erhaltenden Suchergebnissenachricht zu limitieren.

13. Eine Navigationsvorrichtung nach einem der vorhergehenden Ansprüche, wobei der Prozessor (210) ferner konfiguriert ist, nach Auswahl der auswählbaren Option, welche mit der Strecke verbunden ist, besagte Anzeige (240) zu kontrollieren, um für jedes Suchergebnis die kürzeste Distanz zwischen der Route und der Position, welche mit dem Suchergebnis assoziiert ist, anzuzeigen.

14. Ein Navigationssystem, umfassend eine Navigationsvorrichtung (200) nach irgendeinem der vorhergehenden Ansprüche und einem entfernten Kartenserver (530), mit welchem die Navigationsvorrichtung (200) über eine Netzwerkverbindung (532, 534, 536, 538, 542, 546, 550) kommunizieren kann.

15. Ein Navigationsverfahren zur Lokalisierung eines unbekannten Ziels in einer Navigationsvorrichtung (200) umfassend Routenplanungsfunktion, wobei das Verfahren die folgenden Schritte umfasst:
Berechnung einer Route von einer Startposition zu einer Zielposition;
ein Benutzer wählt eine auswählbare Option über eine Benutzerschnittstelle (220, 240) der Navigationsvorrichtung von einer Vielzahl von auswählbaren Optionen aus, welche auf einem Bildschirm angezeigt werden, wobei jede auswählbare Option assoziiert ist mit zumindest einer Referenzposition, die ausgewählte Option assoziiert ist mit einer Route, die Route eine Vielzahl von Referenzpositionen umfasst;
ein Benutzer gibt einen Suchtext ein, der das unbekannte Ziel angibt;
die Navigationsvorrichtung (200) generiert eine Serveranrufnachricht auflistend eine Vielzahl von Referenzpositionen, die mit der Route assoziiert sind, und den zu übertragenden Suchtext an den entfernten Kartensuchserver (530) und die erhaltenden Suchergebnisseantwortnachricht umfasst eine oder mehrere Suchergebnisse von einem solchen entfernten Kartensuchserver (530) basierend auf der Vielzahl von Referenzpositionen, welche mit der Route und dem Suchtext assoziiert sind; und
die Navigationsvorrichtung (200), welche die Suchergebnisse einem Benutzer auf einer Anzeigenvorrichtung (240) von der Navigationsvorrichtung anzeigt, und eine Angabe anzeigend für jedes Ergebnis, ob das Suchergebnis auf der Route ist, in der Nähe der Route ist oder abseits der Route ist.

16. Ein Verfahren nach Anspruch 15, wobei nach Auswahl von der auswählbaren Option, welche mit der Strecke assoziiert ist, die Navigationsvorrichtung auf der Anzeigevorrichtung (240) für jedes Suchergebnis eine kürzeste Entfernung zwischen der Route und der Position, welche mit dem Suchergebnis assoziiert ist, anzeigt.

17. Computersoftware, umfassend eine oder mehrere Softwaremodule funktionsbereit, wenn in einer ausführbaren Umgebung ausgeführt, den Prozessor (210) der Navigationsvorrichtung (200) zu bedingen, das Navigationsverfahren nach Anspruch 15 oder 16 auszuführen.

## Revendications

1. Dispositif de navigation (200) comprenant :
un processeur (210) ;
un affichage (240) qui peut être commandé par le processeur pour afficher un écran avec une pluralité d'options sélectionnables, chaque option sélectionnable étant associée à au moins un emplacement de référence ;
une interface d'entrée (220, 240) qui peut être commandée par le processeur, l'interface d'entrée étant configurée pour permettre à un utilisateur de sélectionner au moins un emplacement de référence en sélectionnant une de la pluralité d'options sélectionnables ; et
un module de recherche par liaison radio (OTA) (490) pour générer un message d'appel de serveur comprenant le au moins un emplacement de référence et un texte de recherche pour transmission à un serveur de recherche cartographique à distance (530) et pour recevoir un message de réponse en matière de résultat(s) de recherche comprenant un ou plusieurs résultats de recherche provenant d'un tel serveur de recherche cartographique à distance (530) sur la base du au moins un emplacement de référence et du texte de recherche, et le processeur (210) étant sensible au module de recherche OTA (490) pour commander ledit affichage (240) afin qu'il affiche les résultats de recherche pour l'utilisateur,
dans lequel le processeur (210) est en outre configuré pour mettre en oeuvre une fonctionnalité de planification de route afin de calculer une route d'une position de départ à une position de destination,
**caractérisé en ce que** :
l'interface d'entrée est configurée en outre pour permettre à un utilisateur de saisir le texte de recherche ; et
dans lequel la route est associée à une de la pluralité d'options sélectionnables,
la route comprenant une pluralité d'emplacements de référence et le processeur (210) étant en outre configuré, lors de la sélection de l'option sélectionnable associée à la route, pour commander ledit affichage (240) afin qu'il affiche une indication, pour chaque résultat de recherche, si le résultat de recherche se trouve sur la route, près de la route ou hors de la route.

2. Dispositif de navigation selon la revendication 1, dans lequel un résultat de recherche dans le message de réponse sur les résultats de recherche se rapporte à une entité et énumère le nom de l'entité et l'emplacement de l'entité.

3. Dispositif de navigation selon la revendication 1 ou la revendication 2, dans lequel un résultat de recherche sur les résultats de recherche affichés pour l'utilisateur sur l'affichage (240) est sélectionné par un utilisateur en agissant sur l'interface d'entrée (220) et l'interface utilisateur (240) fournit des options à un utilisateur concernant le fonctionnement du dispositif de navigation (200) par rapport au résultat de recherche sélectionné.

4. Dispositif de navigation selon la revendication 3, dans lequel une dite option comprend l'option de commande du dispositif de navigation (200) pour faire naviguer l'utilisateur jusqu'à l'emplacement d'une unité à laquelle le résultat de recherche se rapporte.

5. Dispositif de navigation selon la revendication 3, dans lequel le dispositif de navigation comprend une mémoire (230) et une dite option comprend l'option du dispositif de navigation (200) pour stocker le résultat de recherche sélectionné dans la mémoire.

6. Dispositif de navigation selon la revendication 3, dans lequel une dite option comprend l'option du module de recherche OTA qui génère un message d'appel du serveur énumérant :
une entité à laquelle le résultat de recherche sélectionné se rapporte ; et
une demande de plus de détails sur l'entité pour la transmission
à un tel serveur de recherche cartographique à distance (530) et pour recevoir un message de réponse en matière de résultat(s) de recherche d'un tel serveur de recherche cartographique à distance (530) sur la base de l'entité et de la demande et le processeur (210) étant sensible au module de recherche OTA (490) pour commander ledit affichage (240) afin d'afficher des détails supplémentaires sur l'entité à l'attention de l'utilisateur.

7. Dispositif de navigation selon l'une quelconque des revendications précédentes, comprenant une antenne (250) et un récepteur (250) pour recevoir des signaux de données via ladite antenne, dans lequel ledit processeur (210) est configuré pour déterminer à partir des signaux reçus un emplacement courant du dispositif de navigation.

8. Dispositif de navigation selon l'une quelconque des revendications précédentes, comprenant en outre ou étant connecté à une fonctionnalité de connexion au réseau (320, 322, 280) et le processeur (210) est configuré pour commander le module de recherche OTA (490) et la fonctionnalité de connexion au réseau afin de transmettre le message d'appel du serveur à ce serveur de recherche cartographique (350) et de recevoir le message en matière de résultat(s) de recherche de ce serveur de recherche cartographique via une connexion au réseau (532, 534, 536, 538, 542, 546, 550).

9. Dispositif de navigation selon la revendication 8, dans lequel la fonctionnalité de connexion du réseau (320, 322, 280) comprend une fonctionnalité de téléphone mobile et le message en matière de résultat(s) de recherche comprend un numéro de contact téléphonique d'une entité à laquelle au moins l'un des résultats de recherche se rapporte, et dans lequel un résultat de recherche des résultats de recherche affichés sur l'affichage (240) est sélectionné par un utilisateur par fonctionnement de l'interface d'entrée (220) et l'interface d'entrée (220) commandée par le processeur (210) fournit à un utilisateur une option de composer le numéro de contact téléphonique de l'entité en utilisant la fonctionnalité de téléphone mobile.

10. Dispositif de navigation selon l'une quelconque des revendications précédentes, comprenant en outre un émetteur (320) et un récepteur (322) par lesquels le dispositif de navigation communique avec un serveur dédié (302), dans lequel le processeur (210) est configuré pour commander le module de recherche OTA (490) afin de transmettre le message d'appel du serveur au serveur et de recevoir le message en matière de résultat(s) de recherche du serveur et le serveur (302) est configuré pour communiquer avec un tel serveur de recherche cartographique via une connexion au réseau (536, 546, 550, 532, 542).

11. Dispositif de navigation selon l'une quelconque des revendications 8 à 10, dans lequel la connexion au réseau se fait via l'Internet.

12. Dispositif de navigation selon l'une quelconque des revendications précédentes, dans lequel le message d'appel du serveur comprend en outre une instruction limitant le nombre de résultats de recherche renvoyés dans le message en matière de résultat(s) de recherche.

13. Dispositif de navigation selon l'une quelconque des revendications précédentes, dans lequel le processeur (210) est en outre configuré, lors de la sélection de l'option sélectionnable associée à la route, pour commander ledit affichage (240) afin qu'il affiche, pour chaque résultat de recherche, la distance la plus courte entre la route et l'emplacement associé au résultat de recherche.

14. Système de navigation comprenant un dispositif de navigation (200) selon l'une quelconque des revendications précédentes et un serveur cartographique à distance (530) avec lequel le dispositif de navigation (200) peut communiquer via une connexion au réseau (532, 534, 536, 538, 542, 546, 550).

15. Procédé de navigation pour localiser une destination inconnue dans un dispositif de navigation (200) comprenant une fonctionnalité de planification de route, le procédé comprenant les étapes comprenant :
le calcul d'une route d'une position de départ à une position de destination ;
la sélection par un utilisateur d'une option sélectionnable via une interface utilisateur (220, 240) du dispositif de navigation à partir d'une pluralité d'options sélectionnables affichées sur un écran, chaque option sélectionnable étant associée à au moins un emplacement de référence, l'option sélectionnée étant associée à la route, la route comprenant une pluralité d'emplacements de référence ;
une saisie par l'utilisateur d'un texte de recherche indiquant la destination inconnue ;
la génération par le dispositif de navigation (200) d'un message d'appel du serveur énumérant la pluralité d'emplacements de référence associés à la route et le texte de recherche pour la transmission à un serveur de recherche cartographique à distance (530) et la réception d'un message de réponse an matière de résultat(s) de recherche comprenant un ou plusieurs résultats de recherche venant d'un tel serveur de recherche cartographique à distance (530) sur la base de la pluralité d'emplacements de référence associés à la route et du texte de recherche ; et
l'affichage par le dispositif de navigation (200) des résultats de recherche à l'attention d'un utilisateur sur le dispositif d'affichage (240) du dispositif de navigation et l'affichage d'une indication, pour chaque résultat de recherche, si le résultat de recherche se trouve sur la route, près de la route ou hors de la route.

16. Procédé selon la revendication 15, dans lequel, lors de la sélection de l'option sélectionnable associée à la route, le dispositif de navigation affiche sur le dispositif d'affichage (240), pour chaque résultat de recherche, la distance la plus courte entre la route et l'emplacement associé au résultat de recherche.

17. Logiciel informatique comprenant un ou plusieurs modules logiciels opérant, lorsqu'il est ou sont exécutés dans un environnement d'exécution, pour amener le processeur (210) d'un dispositif de navigation (200) à effectuer le procédé de navigation selon la revendication 15 ou la revendication 16.
